# EUROPEAN PATENT APPLICATION

(11) **EP 4 746 384 A1**
(43) Date of publication of application: **20.05.2026**
(21) Application number: 25767440.8
(22) Date of filing: 06.03.2025
(51) Int. Cl.: H04L 67/54

(54) **METHOD FOR BRINGING DEVICE ONLINE , ELECTRONIC DEVICE, AND COMPUTER-READABLE STORAGE MEDIUM**

(30) Priority: 08.03.2024 CN 202410277872
(71) Applicant: HUAWEI TECHNOLOGIES CO., LTD., Shenzhen 518129 (CN)
(72) Inventor: FENG, Yonghui, Shenzhen, Guangdong 518129 (CN); XU, Sai, Shenzhen, Guangdong 518129 (CN)
(74) Representative: Gill Jennings & Every LLP
(86) International application number: PCT/CN2025/081028
(87) International publication number: WO 2025/185700

(57) **Abstract**

This application provides a device get-online method, an electronic device, and a computer-readable storage medium. The method includes: receiving a first packet, where the first packet includes identification information of a second device, first verification data, and a first version number, the first verification data is obtained based on a valid communication key currently stored in the second device, and the first version number is a version number of device information that currently corresponds to the second device and that is required for getting online; determining, based on the first verification data, that a communication key that corresponds to the second device and that is currently stored in the first device is valid, and determining, based on the first version number, that device information that corresponds to the second device and that is currently stored in the first device and that is required for getting online is valid; and getting the second device online. In embodiments of this application, when the first device determines, based on the first verification data and the first version number, that both the communication key that corresponds to the second device and that is currently stored and the device information that is required for getting online are valid, the first device may directly get the second device online, thereby improving device get-online efficiency.

## Description

This application claims priority to Chinese Patent Application No. 202410277872.6, filed with the China National Intellectual Property Administration on March 8, 2024 and entitled "DEVICE GET-ONLINE METHOD, ELECTRONIC DEVICE, AND COMPUTER-READABLE STORAGE MEDIUM", which is incorporated herein by reference in its entirety.

### TECHNICAL FIELD

This application relates to the field of communication technologies, and in particular, to a device get-online method, an electronic device, and a computer-readable storage medium.

### BACKGROUND

With rapid development of smart terminals such as a mobile phone, a tablet, a watch, a head unit, a large screen, a virtual reality device, and a speaker, multi-device collaboration capabilities (such as cross-device transfer, file sharing, and multi-screen collaboration) are also widely used in all aspects of work, life, travel, and learning, and the multi-device collaboration capabilities can provide users with more convenient, efficient, and rich user experience.

Currently, before operations such as cross-device transfer, file sharing, and multi-screen collaboration are performed between devices, the devices usually need to be discovered first and get online. For example, to implement collaboration between the mobile phone and the tablet, the mobile phone needs to first discover the tablet and get the tablet online at the mobile phone. At the same time, how to improve device get-online efficiency is a concern of related technical personnel.

### SUMMARY

Embodiments of this application disclose a device get-online method, an electronic device, and a computer-readable storage medium, to implement hierarchical device get-online and improve device get-online efficiency.

According to a first aspect, a device get-online method is disclosed. The method may be applied to a first device, or may be applied to a module (for example, a processor) in the first device, or may be applied to a logical module or software that can implement all or some functions of the first device. The following uses an example in which the method is applied to the first device for description. The device get-online method may include: receiving a first packet, where the first packet includes identification information of a second device, first verification data, and a first version number, the first verification data is obtained based on a valid communication key currently stored in the second device, and the first version number is a version number of device information that currently corresponds to the second device and that is required for getting online; determining, based on the first verification data, that a communication key that corresponds to the second device and that is currently stored in the first device is valid, and determining, based on the first version number, that device information that corresponds to the second device and that is currently stored in the first device and that is required for getting online is valid; and getting the second device online.

In embodiments of this application, for the device information that corresponds to the second device and that is required for getting online, the second device may set and maintain a corresponding device information version number. When the device information that corresponds to the second device and that is required for getting online changes, the corresponding device information version number changes accordingly. In addition, the second device may further generate corresponding verification data (the first verification data) based on the currently stored valid communication key. In a process in which the device gets online, the second device may send, to the first device, the version number (the first version number) of the device information that currently corresponds to the second device and that is required for getting online and the first verification data, and the first device may determine, based on the first version number, whether the device information that corresponds to the second device and that is currently stored in the first device and that is required for getting online is valid, and may determine, based on the first verification data, whether the communication key that corresponds to the second device and that is currently stored in the first device is valid. If the communication key is valid, the first device may directly get the second device online. It can be learned that, in the foregoing manner, the second device includes the first verification data and the first version number in the packet, to help the first device determine that both the communication key that corresponds to the second device and that is currently stored in the first device and the device information that is required for getting online are valid. In this way, the first device does not need to establish a connection to the second device, and does not need to perform authentication on the second device and obtain the device information that currently corresponds to the second device and that is required for getting online, so that unnecessary connection establishment, device authentication, and device information exchange can be avoided, thereby improving device get-online efficiency. In addition, a quantity of connection establishment times, a quantity of device authentication times, and a quantity of device information exchange times are reduced, so that processing resources, transmission resources, and the like can be saved.

With reference to the first aspect, in a possible implementation, the method further includes: receiving a second packet, where the second packet includes identification information of a third device, third verification data, and a third version number, the third verification data is obtained based on a valid communication key currently stored in the third device, and the third version number is a version number of device information that currently corresponds to the third device and that is required for getting online; determining, based on the third verification data, that a communication key that corresponds to the third device and that is currently stored in the first device is valid, and determining, based on the third version number, that device information that corresponds to the third device and that is currently stored in the first device and that is required for getting online is invalid; establishing a connection to the third device, and obtaining the device information that currently corresponds to the third device and that is required for getting online; and getting the third device online.

In this embodiment of this application, the first device may determine, based on the third verification data, that the communication key that corresponds to the third device and that is currently stored in the first device is valid, and determine, based on the third version number, that the device information that corresponds to the third device and that is currently stored in the first device and that is required for getting online is invalid, the first device may re-obtain only the device information that corresponds to the current third device and that is required for getting online, and does not need to perform re-authentication on the third device, so that unnecessary device authentication can be avoided, and related resources (transmission resources, processing resources, and the like) can be saved.

With reference to the first aspect, in a possible implementation, the method further includes: receiving a third packet, where the third packet includes identification information of a fourth device, fourth verification data, and a fourth version number, the fourth verification data is obtained based on a valid communication key currently stored in the fourth device, and the fourth version number is a version number of device information that currently corresponds to the fourth device and that is required for getting online; determining, based on the fourth verification data, that a communication key that corresponds to the fourth device and that is currently stored in the first device is invalid, and determining, based on the fourth version number, that device information that corresponds to the fourth device and that is currently stored in the first device and that is required for getting online is valid; establishing a connection to the fourth device, performing authentication on the fourth device, and negotiating a communication key; and getting the fourth device online.

In this embodiment of this application, the first device may determine, based on the fourth verification data, that the communication key that corresponds to the fourth device and that is currently stored in the first device is invalid, and determine, based on the fourth version number, that the device information that corresponds to the fourth device and that is currently stored in the first device and that is required for getting online is valid. In this case, the first device may only perform re-authentication on the fourth device, and negotiate a new communication key without exchanging device information, so that unnecessary device information exchange can be avoided, and transmission resources can be saved.

It can be learned from the foregoing description that there may be a plurality of cases in which the first device gets another device online, for example, a case in which both the communication key that corresponds to the device and the device information that is required for getting online are valid; for another example, a case in which the communication key that corresponds to the device is valid and the device information that is required for getting online is invalid; or for another example, the communication key that corresponds to the device is invalid, and the device information that is required for getting online is valid. In this way, if there are a plurality of devices, the first device may divide the plurality of devices into different levels for getting online based on an actual situation. For example, some devices may directly get online, and some devices may get online after exchanging device information, some devices may get online after obtaining a new communication key through authentication negotiation. This online manner of dividing into different levels, so that a signal conflict between devices can be reduced.

With reference to the first aspect, in a possible implementation, the first verification data includes a first Bloom encoding vector, and the first Bloom encoding vector is generated based on the valid communication key currently stored in the second device and one or more hash functions; and determining, based on the first verification data, that the communication key that corresponds to the second device and that is currently stored in the first device is valid includes: determining, based on the first Bloom encoding vector, that the communication key that corresponds to the second device and that is currently stored in the first device is valid.

With reference to the first aspect, in a possible implementation, determining, based on the first Bloom encoding vector, that the communication key that corresponds to the second device and that is currently stored in the first device is valid includes: processing, according to one or more hash functions corresponding to the first Bloom encoding vector, the communication key that corresponds to the second device and that is currently stored in the first device, to obtain one or more hash values; and when values of bits corresponding to the one or more hash values in the first Bloom encoding vector are all 1s, determining that the communication key that corresponds to the second device and that is currently stored in the first device is valid.

In embodiments of this application, the valid communication key currently stored in the second device is processed in the Bloom encoding manner, and the obtained verification data occupies a small quantity of bits, so that transmission resources can be saved.

With reference to the first aspect, in a possible implementation, the fourth verification data includes a fourth Bloom encoding vector, and the fourth Bloom encoding vector is generated based on a valid communication key currently stored in the fourth device and one or more hash functions; and determining, based on the fourth verification data, that the communication key that corresponds to the fourth device and that is currently stored in the first device is invalid includes: determining, based on the fourth Bloom encoding vector, that the communication key that corresponds to the fourth device and that is currently stored in the first device is invalid.

With reference to the first aspect, in a possible implementation, the communication key that corresponds to the fourth device and that is currently stored in the first device is processed according to one or more hash functions corresponding to the fourth Bloom encoding vector, to obtain one or more hash values; and when values of bits corresponding to the one or more hash values in the fourth Bloom encoding vector are not all 1s, determining that the communication key that corresponds to the fourth device and that is currently stored in the first device is invalid.

With reference to the first aspect, in a possible implementation, determining, based on the first version number, that the device information that corresponds to the second device and that is currently stored in the first device and that is required for getting online is valid includes: when the first version number is the same as a second version number, determining that the device information that corresponds to the second device and that is currently stored in the first device and that is required for getting online is valid, where the second version number is a version number of the device information that corresponds to the second device and that is currently stored in the first device and that is required for getting online.

In embodiments of this application, the first device may quickly and accurately determine, by comparing the first version number with the second version number, that the device information that corresponds to the second device and that is currently stored in the first device and that is required for getting online is valid. In addition, the device information version number usually occupies a small quantity of bits, so that transmission resources can be saved.

With reference to the first aspect, in a possible implementation, determining, based on the third version number, that the device information that corresponds to the third device and that is currently stored in the first device and that is required for getting online is invalid includes: when the third version number is different from a fifth version number, determining that the device information that corresponds to the third device and that is currently stored in the first device and that is required for getting online is invalid, where the fifth version number is a version number of the device information that corresponds to the third device and that is currently stored in the first device and that is required for getting online.

With reference to the first aspect, in a possible implementation, the device information that corresponds to the third device and that is currently stored in the first device and that is required for getting online and the device information that currently corresponds to the third device and that is required for getting online respectively include a plurality of pieces of corresponding device information, the third version number and the fifth version number each include a plurality of parts, and each of the plurality of parts corresponds to one or more pieces of device information in the plurality of pieces of device information; and the method further includes: when the third version number is different from the fifth version number, determining, based on each part corresponding to the third version number and each part corresponding to the fifth version number, whether device information corresponding to each part in the device information that corresponds to the third device and that is currently stored in the first device and that is required for getting online is valid; when a first part corresponding to the third version number is the same as a first part corresponding to the fifth version number, determining that device information corresponding to the first part in the device information that corresponds to the third device and that is currently stored in the first device and that is required for getting online is valid, where the first part is any one of the plurality of parts; and when the first part corresponding to the third version number is different from the first part corresponding to the fifth version number, determining that the device information corresponding to the first part in the device information that corresponds to the third device and that is currently stored in the first device and that is required for getting online is invalid. Obtaining the device information that currently corresponds to the third device and is required for getting online includes: obtaining device information corresponding to an invalid part in the device information that currently corresponds to the third device and that is required for getting online.

In embodiments of this application, the device information version number may be divided into a plurality of independent parts, and each part may correspond to one or more pieces of device information. In this way, when the third version number is different from the fifth version number, the first device may determine, by comparing each part of the third version number with each part of the fifth version number, specific device information that changes. In this way, the first device may obtain only the device information that corresponds to the invalid part in the device information that currently corresponds to the third device and that is required for getting online, that is, may update the device information in a targeted manner, so that transmission resources can be saved.

With reference to the first aspect, in a possible implementation, the third version number and the fifth version number each include a second part and a third part, a quantity of bits occupied by the second part is greater than a quantity of bits occupied by the third part, and a change frequency of device information corresponding to the second part is greater than a change frequency of device information corresponding to the third part.

In embodiments of this application, change frequencies of the plurality of pieces of device information corresponding to the device information version number may be different. Some change frequencies are high, and some change frequencies are low. Therefore, to save transmission resources, to avoid misjudgment (for example, device information actually changes, but the first device determines, based on a corresponding version number, that the device information does not change), a most appropriate quantity of bits may be determined for the device information based on a change frequency of the device information, a change frequency of the device information is higher, and a larger quantity of bits for the device may be occupied.

With reference to the first aspect, in a possible implementation, the device information that corresponds to the second device and that is required for getting online includes device information with a first change frequency, device information with a second change frequency, and device information with a third change frequency, the first change frequency is greater than the second change frequency, the second change frequency is greater than the third change frequency, and the third change frequency is 0. The first version number is a version number of the device information with the second change frequency in the device information that currently corresponds to the second device and that is required for getting online, or the first version number is a version number of the device information with the first change frequency and the device information with the second change frequency in the device information that currently corresponds to the second device and that is required for getting online. When the first version number is the version number of the device information with the second change frequency in the device information that currently corresponds to the second device and that is required for getting online, the first packet further includes the device information with the first change frequency in the device information that currently corresponds to the second device and that is required for getting online.

In embodiments of this application, device information that is required for the device to get online may be classified into a plurality of types based on a change frequency, for example, the device information with the first change frequency, the device information with the second change frequency, and the device information with the third change frequency. Because the device information with the high change frequency causes a high change frequency of the device information version number, each time the second device gets online, the first device may need to re-establish a connection to the second device, and re-obtain the device information that corresponds to the second device and that is required for getting online. Therefore, in this application, the device information version number may be associated with only the device information with the low change frequency in the device information that is required for getting online, and the device information with the high change frequency in the device information that is required for getting online may be directly carried in the first packet. In this way, a quantity of connection establishment times can be reduced.

With reference to the first aspect, in a possible implementation, the first verification data and the first version number are carried in a data field of the first packet.

According to a second aspect, an electronic device is disclosed. The electronic device may be a first device. The electronic device includes a processor and a communication interface. The communication interface is configured to: receive and send data. The processor invokes a computer program or computer instructions stored in a memory to implement the method according to any one of the first aspect and the possible implementations of the first aspect.

In a possible implementation, the electronic device disclosed in the second aspect may include one or more processors.

Optionally, the electronic device disclosed in the second aspect further includes one or more memories.

According to a third aspect, a computer-readable storage medium is disclosed. The computer-readable storage medium stores a computer program or computer instructions. When the computer program or the computer instructions are run, the method according to any one of the first aspect and the possible implementations of the first aspect is implemented.

According to a fourth aspect, a chip is disclosed, including a processor, configured to execute a program stored in a memory. When the program is executed, the chip is enabled to perform the method according to any one of the first aspect and the possible implementations of the first aspect.

In a possible implementation, the memory is located outside the chip.

According to a fifth aspect, a computer program product is disclosed. The computer program product includes computer program code. When the computer program code is run, the method according to any one of the first aspect and the possible implementations of the first aspect is performed.

It should be understood that mutual reference may be made to implementations and beneficial effect of the plurality of aspects or any one of the possible implementations of this application.

### BRIEF DESCRIPTION OF DRAWINGS

To describe technical solutions in embodiments of this application more clearly, the following briefly introduces accompanying drawings for describing embodiments of this application. It is clear that the accompanying drawings in the following description show merely some embodiments of this application, and a person of ordinary skill in the art may still derive other drawings from these accompanying drawings without creative efforts.
FIG. 1 is a schematic flowchart of getting a device online according to an embodiment of this application;
FIG. 2 is a diagram of an architecture of a communication system according to an embodiment of this application;
FIG. 3 is a schematic flowchart of a communication method according to an embodiment of this application;
FIG. 4 is a diagram of a packet structure of a BLE broadcast packet according to an embodiment of this application;
FIG. 5A to FIG. 5C are diagrams of some device information version number changes according to an embodiment of this application;
FIG. 6 is a schematic flowchart of another communication method according to an embodiment of this application;
FIG. 7 is a schematic flowchart of still another communication method according to an embodiment of this application;
FIG. 8A to FIG. 8C are a schematic flowchart of yet another communication method according to an embodiment of this application; and
FIG. 9 is a diagram of a hardware structure of an electronic device 900 according to an embodiment of this application.

### DESCRIPTION OF EMBODIMENTS

The following clearly and completely describes technical solutions in embodiments of this application with reference to accompanying drawings in embodiments of this application. In descriptions of embodiments of this application, "/" indicates or, unless otherwise specified. For example, A/B may indicate A or B. In this specification, "and/or" describes only an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more than two.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application (application, APP) or an operating system (operating system, OS) and a user, and implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be identified by the user. A frequently-used representation form of the user interface is a graphical user interface (graphic user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

With rapid development of smart terminals (such as a mobile phone, a tablet, a watch, a head unit, a large screen, a virtual reality device, and a speaker), capabilities of internet of everything and multi-device collaboration are also widely applied to all aspects of work, life, travel, and learning, so that more convenient, efficient, and colorful use experience is provided for the user. For example, in a mobile office scenario, the user may connect a mobile phone, a tablet, a notebook computer, and the like based on the multi-device collaboration capability, and then requirements of a plurality of service types may be met. For example, a file currently edited by the mobile phone may be switched to the tablet or the notebook computer for further editing, alternatively, a task currently executed by the mobile phone may be transferred to the tablet for execution. For another example, a smart home scenario is used as an example. Sports equipment (such as a treadmill or a spinning bike) may be connected to a refrigerator and the like based on the multi-device collaboration capability. After the user exercises via the sports equipment, the sports equipment may synchronize the collected sports data to the refrigerator. The refrigerator may intelligently recommend, based on the sports data, some health recipes that are most suitable for physical recovery and nutrition supplement. In addition, the user may place an order to purchase corresponding food via the refrigerator.

Currently, before operations such as cross-device transfer, file sharing, and multi-screen collaboration are performed between devices, the devices usually need to be discovered first and get online, and further needs to establish a connection.

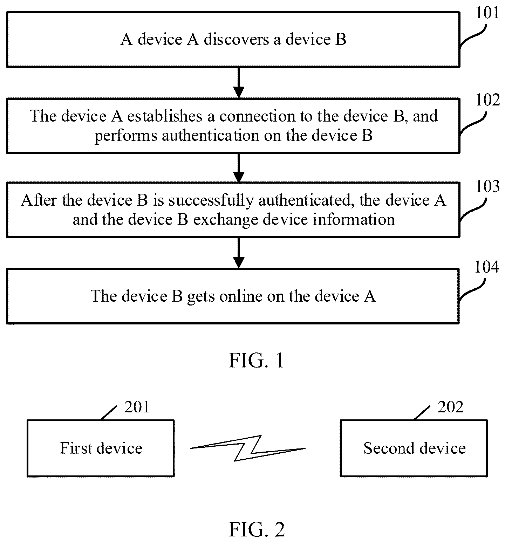

The following describes an example of a process of getting a device online, and reference may be made to FIG. 1. As shown in FIG. 1, the processing procedure may include but is not limited to the following steps.

101: A device A discovers a device B.

In this embodiment of this application, the device A may discover the device B in a plurality of possible implementations. The following provides two examples.

In a first implementation, the device A actively initiates scanning to search for a device in a same network or a nearby device. In this implementation, the device A may send a discovery packet in a broadcast manner, where the discovery packet may include related information of the device A (such as a name and a device type of the device A). A device located in a same network as the device A or near the device A may receive the discovery packet sent by the device A, and may send a discovery response packet to the device B based on the discovery packet, where the discovery response packet may include related information of the device. When the device A receives a discovery response packet returned by another device, the device A may discover the corresponding device. For example, after receiving the discovery packet sent by the device A, the device B may send a discovery response packet to the device A, where the discovery response packet may include related information of the device B (such as a name and a device type of the device B). After the device A receives the discovery response packet from the device B, the device B is discovered.

In a second implementation, the device B usually periodically sends information of the device B (such as the name and the device type of the device B) in a broadcast manner, a multicast manner, or the like, and the device A may receive the information sent by the device B, to discover the device B. This implementation is equivalent to that the device A passively scans for a device in a same network or a nearby device.

It should be understood that the foregoing two implementations are merely examples. For different communication manners (such as Bluetooth, Ethernet, and Wi-Fi), specific processes of discovering the device may be different.

102: The device A establishes a connection to the device B, and performs authentication on the device B.

After the device A discovers the device B, the device A may establish a communication connection, for example, a Bluetooth connection or a Wi-Fi connection, to the device B. \After the communication connection is established, the device A may perform trusted authentication on the device B, for example, determine, according to a trust circle mechanism, whether the device B is trustworthy. It should be understood that establishing the connection is establishing a communication link between the device A and the device B.

It may be understood that, in some cases, the device B may also perform trusted authentication on the device A, that is, the device A and the device B need to perform two-way authentication.

103: After the device B is successfully authenticated, the device A and the device B exchange device information.

After the device B is successfully authenticated, the device A and the device B may exchange device information required for getting online, for example, a device name, device capability information, and connection information, and may locally store the device information. It should be noted that, in a device authentication process, the device A and the device B may obtain a communication key through negotiation, so that encrypted communication can be performed based on the communication key subsequently.

104: The device B gets online on the device A.

After the device A and the device B exchange device information, the device B can get online on the device A, and the device A can notify a corresponding upper-layer service (for example, a super terminal). It should be understood that, because bottom-layer resources of the device are limited, generally, after the device B successfully gets online on the device A, the device A may disconnect from the device B. Then, when operations such as cross-device transfer, file sharing, and multi-screen collaboration need to be performed between the device A and the device B, the device A may establish a connection to the device B again.

It may be understood that the device B may get offline after getting online. For example, the user may change functions such as Bluetooth and Wi-Fi of the device B from an enabled state to a disabled state. Certainly, when functions such as Bluetooth and Wi-Fi of the device B are enabled again, the foregoing steps 101 to 104 may be performed again to get online again.

It can be learned that the foregoing processing procedure is applicable to a case in which the device gets online for the first time and a case in which the device gets online not for the first time. In other words, when the device B gets online for the first time and the device B gets online not for the first time, the foregoing steps 101 to 104 are performed between the device A and the device B. A process of establishing a connection between the device A and the device B and performing authentication is time-consuming. In addition, when the device A discovers a plurality of devices, the device A may simultaneously establish connections to the plurality of devices. In this case, a signal conflict or interference may exist between the devices, consequently, connection reliability is affected, and a connection success rate is reduced. In addition, generally, after a device gets offline, when the device gets online again, device information changes little or does not change. In this case, the device A and the device B still exchange all device information that is required for getting online, and there is a large amount of unnecessary data exchange, wasting transmission resources.

Further, as various devices are developing towards intelligence currently, more and more devices need to be interconnected, for example, a smart screen, a notebook computer, a mobile phone, a tablet computer, a robotic vacuum cleaner, a refrigerator, and sports equipment (such as a treadmill and a spinning bike), an air purifier, a smart oven, a smart curtain, and a smart sensor (for example, a temperature sensor, a humidity sensor, and a smoke sensor in each room) in a home scenario. In this case, if connections need to be established for authentication and device information exchange before devices can get online, underlying resources may have bottlenecks, as a result, device get-online efficiency is low.

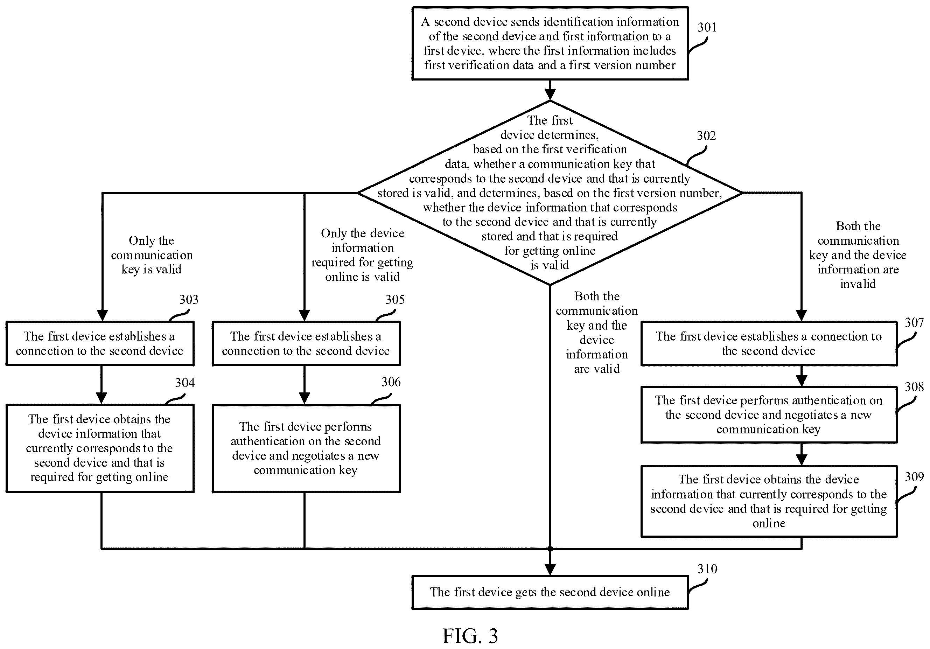

To resolve the foregoing problem, this application provides a device get-online method. According to the method, unnecessary device information exchange can be avoided, and transmission resources can be saved. In addition, devices can get online at a plurality of levels (hierarchical get-online for short), improving efficiency of getting a device online not for the first time, and reducing signal conflicts between devices. A core concept of the method is as follows: When the second device gets online not for the first time, the first device may locally store authentication information (such as a communication key) of the second device and device information that corresponds to the second device and that is required for getting online, if the authentication information of the second device stored in the first device is valid, the first device may not need to perform re-authentication on the second device. Similarly, if the device information that corresponds to the second device and that is required for getting online and that is stored in the first device is valid, the first device may not need to re-obtain the device information of the second device, or if a part of the device information that corresponds to the second device and that is required for getting online and that is stored in the first device is valid, and a part is invalid, the first device may re-obtain only device information of the invalid part. For specific content, refer to steps in the following method embodiment such as FIG. 3.

In some embodiments, the second device may generate first verification data based on a valid communication key (referred to as a valid communication key for short) currently stored in the second device. In a discovery process, the second device may send the first verification data to the first device, the first device may generate second verification data based on the communication key that corresponds to the second device and that is currently stored. Then, the first device may determine, based on the first verification data and the second verification data, whether the communication key corresponding to the second device is valid. If the communication key is valid, the first device may not need to perform authentication on the second device again. If the communication key is invalid, a connection needs to be established, and the first device needs to perform re-authentication on the second device, to negotiate a new communication key.

In some embodiments, the device information required for the device to get online may be classified into three types: unchanged, medium change frequency, and high change frequency based on the change frequency. For unchanged device information, the first device may obtain the information in a process in which the second device gets online for the first time and store the information locally. Subsequently, for a process in which the second device gets online not for the first time, the first device may not need to obtain the information again. For the device information with the medium change frequency and the device information with the high change frequency, initially, the second device may set/bind a device information version number to the device information as a whole, and then each change of the device information causes a change of the device information version number. Based on this, the second device may send the current device information version number to the first device in the discovery process, so that the first device can determine, based on the device information version number, whether the device information with the medium change frequency and the device information with the high change frequency in the device information that currently corresponds to the second device and that is required for getting online change, that is, determine whether the device information with the medium change frequency and the device information with the high change frequency in the locally stored device information that corresponds to the second device and that is required for getting online are the same. For example, the second device may send a first version number to the first device in the discovery process. The first version number may be a device information version number of the device information that currently corresponds to the second device and that is required for getting online. The first device locally stores previously obtained device information that corresponds to the second device and that is required for getting online and a corresponding second version number, and the first device may compare the first version number with a second version number. If the first version number is the same as the second version number, it indicates that the device information with the medium change frequency and the device information with the high change frequency in the device information that corresponds to the second device and that is required for getting online do not change, and do not need to be re-obtained. If the device information with the medium change frequency and the device information with the high change frequency are different, it indicates that the device information with the medium change frequency and the device information with the high change frequency in the device information that corresponds to the second device and that is required for getting online change, and the first device needs to re-establish a connection to the second device to obtain the device information.

Further, the device information with the high change frequency causes a high change frequency of a device information version number. Therefore, each time the second device gets online, the first version number may be different from the second version number, and a connection needs to be established to obtain related device information. Therefore, in some possible implementations, to avoid a case in which a connection needs to be established in each process in which the second device gets online, the second device may set the device information version number only based on the device information with the medium change frequency. For the device information with the high change frequency (this part of information is usually small), the second device may directly send the device information to the first device in the discovery process. In this way, a quantity of connection establishment times can be reduced.

Further, the first device may further determine, based on the first version number and the second version number, which device information changes, so that the device information can be updated in a targeted manner, and transmission resources can be saved.

It can be learned that, based on the foregoing method, in a process in which the second device gets online, the first device may determine, based on the encoding vector corresponding to the valid key, whether the second device needs to be performed re-authentication on, or may determine, based on the device information version number, whether the related device information of the second device needs to be re-obtained. In this way, unnecessary authentication and device information exchange can be avoided, transmission resources can be saved, a quantity of connection establishment times can be reduced, and device get-online efficiency can be improved. Even in some cases, the second device can get online without establishing a connection between the first device and the second device.

To better understand embodiments of this application, the following briefly describes related content, terms, or nouns in this application.

### 1. Soft bus

The soft bus may be understood as a virtual bus technology, and may implement flexible connection and networking between devices in a software manner, to facilitate communication (data exchange) and cooperative work between the devices. For example, the soft bus may be used as a communication base of devices such as a mobile phone, a tablet, a smart wearable, a smart screen, and a head unit, to provide a unified distributed communication capability for interconnection and interworking between the devices. The soft bus may also be referred to as a distributed soft bus.

The soft bus may have various functions such as device discovery, device connection, and device networking. In addition, the soft bus may support device discovery through different media such as Wi-Fi, Bluetooth, and Ethernet, and may be selected based on a capability of a device. In addition, the soft bus may further adjust a proper scanning periodicity, a proper broadcast periodicity, and the like based on a device capability, a service requirement, and the like.

In conclusion, devices with different capabilities and features can implement interconnection and interworking through the distributed soft bus, thereby implementing collaboration between a plurality of devices, such as cross-device task transfer, file sharing, and multi-screen collaboration.

### 2. Bloom filter

A hash (hash) algorithm (function) may also be referred to as a hashing algorithm, and may convert an input of any length into an output of a fixed length. The output value may be referred to as a hashing value or a hash value. The hash function has an important feature, that is, an output of the hash function is theoretically irreversible, that is, original input data cannot be derived from a hash value, ensuring security. For example, a hash function may be hash (key)=key % p, where key may be an input value, % is a modulo operation, and p may be a modulo.

The Bloom filter may encode and compress a data set to small storage space, and may query whether an element is in a data set. Specifically, for a data set, the Bloom filter may encode and compress the data set into an m-bit (bit) vector according to a hash function. Initially, all bits of the m-bit vector may be 0s. For a data set S, it is assumed that the set S includes three elements: x1, x2, and x3. A hash value of each element may be calculated according to three independent hash functions, and then three bits may be selected from the m-bit vector based on the three calculated hash values, and the three bits are set to 1s. A range of a hash value generated according to each of the three hash functions may belong to [0, m-1]. For example, if the three hash values obtained through calculation are 0, 2, and 5, each of the 0^{th} bit, the 2^{nd} bit, and the 5^{th} bit in the m-bit vector may be set to 1, for example, 101001000.... After the hash value is calculated based on all the elements in the set S, and the specific bit in the m-bit vector is set to 1 based on the hash value obtained through calculation, an encoding vector corresponding to the set S may be obtained. The encoding vector is an m-bit vector including 0 and 1. Then, if whether an element xn exists in the set S needs to be searched for, three hash values corresponding to xn may be calculated according to the same three hash functions, and then an m-bit encoding vector corresponding to xn may be obtained, and three bits in the encoding vector corresponding to xn may be set to 1s. Then, whether the corresponding three bits in the encoding vector corresponding to the set S are 1s may be checked. If all the three bits are 1s, it may be considered that the set S includes xn; or if not all the three bits are 1 or at least one bit is not 1, it may be considered that the set S does not include xn. It should be understood that there may be a repeated hash value in all hash values that are of all elements in the set S and that are calculated according to a plurality of different hash functions. Therefore, one bit in the encoding vector corresponding to the set S may be set to 1 for a plurality of times, but impact is caused only for the first time.

To better understand embodiments of this application, the following first describes a system architecture in embodiments of this application.

FIG. 2 is a diagram of an architecture of a communication system according to an embodiment of this application. As shown in FIG. 2, the communication system may include a first device 201 and a second device 202.

The first device 201 and the second device 202 may communicate with each other, and a used communication manner may be wired communication or wireless communication. For example, the first device 201 and the second device 202 may communicate with each other in a manner, for example, Wi-Fi, Ethernet, Bluetooth, ZigBee, power line communication (power line communication, PLC), infrared, near field communication (near field communication, NFC), or ultra wideband (ultra wideband UWB). In some embodiments, the first device 201 and the second device 202 may be located in a same network, for example, connected to a same access point (access point, AP).

In this embodiment of this application, specific types of the first device 201 and the second device 202 are not limited. The first device 201 and the second device 202 may be a smartphone, a television, a wireless headset, a wearable device (such as a smartwatch or a smart band), a speaker, a notebook computer, a desktop computer, an ultra-mobile personal computer (ultra-mobile personal computer, UMPC), a tablet computer, an augmented reality (augmented reality, AR) device, a virtual reality (virtual reality, VR) device, an internet of things (internet of things, IoT) device (for example, a temperature sensor, an air quality sensor, and a humidity sensor), a smart home device (for example, a smart door lock, a smart refrigerator, a smart desk lamp, a treadmill, a spinning bike, an air purifier, an air conditioner, a dishwasher, a robotic vacuum cleaner, and an electric curtain), and a vehicle-mounted apparatus (for example, a head unit, a large screen of a driver, a large screen of a front passenger, a rear-row display 1, and a rear-row display 2), and the like. The first device 201 and the second device 202 may alternatively be chips or processing systems in the foregoing devices.

In this embodiment of this application, the second device 202 may send first verification data to the first device 201 in a broadcast manner, a multicast manner, or the like. The first verification data is generated by the second device 202 based on a valid communication key currently stored in the second device 202, and the first device 201 may determine, based on the first verification data, whether the first device 201 needs to perform re-authentication on the second device 202, to negotiate a new communication key. Alternatively, the second device 202 may send a first version number to the first device 201 in a broadcast manner, a multicast manner, or the like. The first version number may be a device information version number of device information with a medium change frequency in device information that currently corresponds to the second device 202 and that is required for getting online, the first device 201 may determine, based on the first version number and the second version number, whether the device information with the medium change frequency in the device information that corresponds to the second device 202 and that is required for getting online needs to be re-obtained, and the second version number may be a device information version number of the device information with the medium change frequency in the device information that corresponds to the second device 202 and that is currently stored in the first device 201 and that is required for getting online. Alternatively, the second device 202 may send, to the first device 201 in a broadcast manner, a multicast manner, or the like, device information with a high change frequency in the device information that currently corresponds to the second device 202 and that is required for getting online, so that the first device 201 can update the part of information without establishing a connection to the second device 202.

It can be learned that, in the foregoing manner, a device that does not need to establish a connection can get online (that is, a device that does not need to establish a connection for authentication and obtain device information can get online), a device that only needs to be performed authentication on but does not need to exchange device information can get online, or a device that only needs to exchange device information but does not need to be performed authentication on can get online.

It should be understood that FIG. 2 is merely a diagram. The architecture shown in FIG. 2 may further include more or fewer devices. This is not limited herein.

It should be noted that system architectures and service scenarios (or application scenarios) and the like described above in embodiments of this application are intended to describe the technical solutions in embodiments of this application more clearly, and do not constitute any limitation on the technical solutions provided in embodiments of this application.

The following describes an overall processing procedure of the technical solution provided in this embodiment of this application by using an example.

FIG. 3 is a schematic flowchart of a communication method according to an embodiment of this application. As shown in FIG. 3, the method may include but is not limited to the following steps.

301: A second device sends identification information of the second device and first information to a first device, where the first information includes first verification data and a first version number.

The identification information of the second device is information that can identify the second device, for example, a name of the second device, an identifier (ID) of the second device, or address information of the second device. The identifier of the second device may be a unique device identifier (unique device identifier, UDID) of the device, a hash value corresponding to the UDID, or the like. The address information of the second device may be a media access control (media access control, MAC) address of the second device, or may be an internet protocol (internet protocol, IP) address, an IP address and a port number, or the like.

The first verification data is generated based on a valid communication key currently stored in the second device, and may be used by the first device to verify whether a communication key that corresponds to the second device and that is currently stored in the first device is valid. For example, the first verification data may be a first Bloom encoding vector. The first Bloom encoding vector may be generated based on the valid communication key currently stored in the second device and one or more hash functions. It should be understood that, in this embodiment of this application, a communication key obtained between the two devices (for example, the first device and the second device) through authentication and negotiation may be a symmetric key. In other words, the two parties that send data and receive data use a same key. For example, it is assumed that valid communication key currently stored in the second device includes a communication key 1, a communication key 2, and a communication key 3. The communication key 1 may be a communication key used between the first device and the second device, the communication key 2 may be a communication key used between the first device and a third device, and the communication key 3 may be a communication key used between the first device and a fourth device. The first Bloom encoding vector may be associated with a first hash function, and the first hash function may include one or more hash functions. It is assumed that the first hash function includes three hash functions: a hash function 1, a hash function 2, and a hash function 3. A range of a hash value generated according to each hash function may belong to [0, m-1], where m is a positive integer greater than 2. The second device may obtain, through calculation according to the hash function 1, the hash function 2, and the hash function 3, three hash values (for example, 0, 2, and 10) corresponding to the communication key 1. Alternatively, the second device may obtain, through calculation according to the hash function 1, the hash function 2, and the hash function 3, three hash values (for example, 5, 15, and 31) corresponding to the communication key 2. Alternatively, the second device may obtain, through calculation according to the hash function 1, the hash function 2, and the hash function 3, three hash values (for example, 13, 19, and 25) corresponding to the communication key 3, and may obtain nine hash values in total. The second device may set locations corresponding to the nine hash values in an m-bit vector to 1, to obtain a corresponding first Bloom encoding vector. It should be understood that, if the nine hash values are all different, the m bits may include nine bits that are set to 1. For example, if m is 32, and the nine hash values obtained through calculation may be 0, 2, 5, 10, 13, 15, 19, 25, and 31, the 0^{th} bit, the 2^{nd} bit, the 5^{th} bit, the 10^{th} bit, the 13^{th} bit, the 15^{th} bit, the 19^{th} bit, the 25^{th} bit, and the 31^{st} bit in the m-bit vector may be set to 1, for example, 101001000...10.

In addition to verifying, in a Bloom encoding manner, whether the communication key is valid, other processing may be performed based on the valid communication key currently stored in the second device, to generate the corresponding first verification data. For example, the second device may directly process the currently stored valid communication key according to one or more hash functions (for example, the hash function 1, the hash function 2, and the hash function 3), to obtain one or more hash values, and then may use the one or more hash values as the first verification data. Then, the first device may process, according to a same hash function, the communication key that corresponds to the second device and that is currently stored, to obtain one or more hash values. Then, the first device may check whether the one or more hash values exist in the first verification data. If the one or more hash values exist in the first verification data, it may be considered that the communication key that corresponds to the second device and that is currently stored is valid; otherwise, it may be considered that the communication key that corresponds to the second device and that is currently stored is invalid. For another example, the second device may encrypt preset information (for example, a string of arrays) based on the currently stored valid communication key, to obtain encrypted data corresponding to each communication key, and then may use encrypted data corresponding to all communication keys as the first verification data. Then, the first device may decrypt the first verification data based on the communication key that corresponds to the second device and that is currently stored. If one of results obtained through decryption is the preset information, it may be considered that the communication key that corresponds to the second device and that is currently stored is valid; otherwise, it may be considered that the communication key that corresponds to the second device and that is currently stored is invalid.

Before the first version number is described, the following first describes the device information by using an example. From a perspective of a change frequency, the device information may be classified into a plurality of types or a plurality of levels based on different change frequencies. In this embodiment of this application, the device information is mainly divided into three levels. However, in some other embodiments of this application, the device information may alternatively be divided into more or fewer levels. For example, the three levels obtained through division in this embodiment of this application may be respectively unchanged, medium change frequency, and high change frequency. "Unchanged" may be understood as that the device information remains unchanged, and is not interfered by external conditions such as restoring factory settings and restarting. "Medium change frequency" may be understood as that the device information changes, but does not change frequently. For example, an average change frequency is greater than 0 times/minute, but is less than a first change frequency (for example, once/6 hours). "High change frequency" may be understood as that the device information changes frequently. For example, an average change frequency is greater than or equal to the first change frequency (for example, once/6 hours). The change frequency is measured based on an average quantity of change times in a time period. However, this is not limited in embodiments of this application. Alternatively, the change frequency may be measured in another manner. For example, device information that does not change within a first time threshold (for example, 10 minutes) after the device gets offline may be considered as device information with the "medium change frequency", and device information that changes within the first time threshold (for example, 10 minutes) after the device gets offline is considered as device information with the "high change frequency". From the perspective of get-online, device information can be classified into two types: device information required for device get-online (referred to as device information required for device get-online in this document) and device information not required for device get-online. For example, refer to Table 1. Table 1 shows change frequencies of some device information and whether the device information is required for getting online.

**Table 1**

| Device information name | Change frequency | Whether to be required for getting online |
|---|---|---|
| Network ID | High | Yes |
| Device name | Medium | Yes |
| Device type | Unchanged | Yes |
| Device UDID | Unchanged | Yes |
| Device UUID | Medium | Yes |
| Device capability | High | Yes |
| Transport protocol | Medium | Yes |
| Battery power | High | No |
| Whether a screen is on | High | No |
| Bluetooth MAC address | Medium | Yes |
| Account ID | Medium | Yes |
| Feature supported by a soft bus | Medium | Yes |

For example, the device capability may include a current short-range capability of the device, for example, a Wi-Fi status (enabled or disabled), a Bluetooth status, a P2P capability, and whether COC is supported. It should be understood that Table 1 is merely an example for description, and should not constitute a limitation on embodiments of this application. Based on the foregoing description, the following describes the first version number by using an example.

The first version number may be a device information version number of device information that currently corresponds to the second device and that is required for getting online. The device information version number of the device information may also be referred to as a version number of the device information for short. In this embodiment of this application, for the device information that corresponds to the second device and that is required for getting online, a device information version number may be set, to indicate/identify a version of the corresponding device information. When the device information that corresponds to the second device and that is required for getting online changes, the corresponding device information version number also changes, for example, the version number is increased by 1.

Further, there are a plurality of pieces of device information that correspond to the second device and that are required for getting online, and the plurality of pieces of device information may be classified into a plurality of levels based on a change frequency. Therefore, in this embodiment of this application, there are a plurality of manners of setting the device information version number. The following provides two examples. In a first example, a device information version number is set based on the device information with the medium change frequency and the device information with the high change frequency in the device information that corresponds to the second device and that is required for getting online. In other words, the device information version number is associated with the device information with the medium change frequency and the device information with the high change frequency in the device information that corresponds to the second device and that is required for getting online. In a second example, the device information version number is set only based on the device information with the medium change frequency in the device information that corresponds to the second device and that is required for getting online. In other words, the device information version number is associated only with the device information with the medium change frequency in the device information that corresponds to the second device and that is required for getting online.

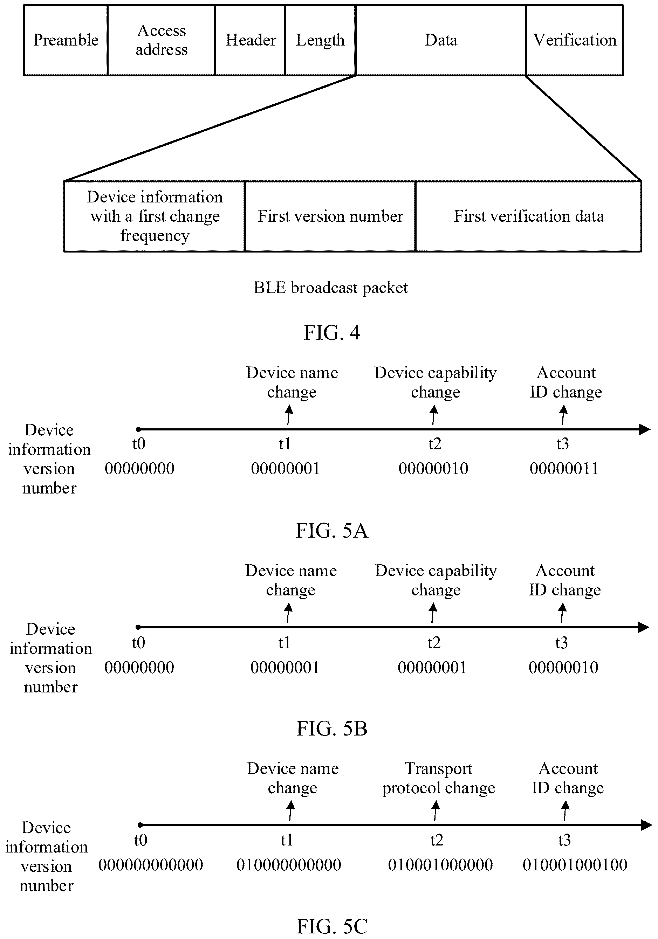

For example, it is assumed that a device information version number is set based on the device information with the medium change frequency and the device information with the high change frequency in the device information that corresponds to the second device and that is required for getting online, and the device information version number is represented by using 8 bits (bit). As shown in FIG. 5A, at initial t0, the device information version number may be 00000000. If the device name is changed at t1, the device information version number may be increased by 1 and changed to 00000001; if the device capability is changed (for example, Bluetooth is disabled) at t2, the device information version number may be increased by 1 and changed to 00000010; and if the account ID is changed at t3, the device information version number can be increased by 1 again and changed to 00000011. It is assumed that the device information version number is set only based on the device information with the medium change frequency in the device information that corresponds to the second device and that is required for getting online, and the device information version number is represented by using 8 bits. As shown in FIG. 5B, at initial t0, the device information version number may be 00000000. If the device name is changed at t1, the device information version number may be increased by 1 and changed to 00000001; if the device capability is changed (for example, Bluetooth is disabled) at t2, because the device capability belongs to the device information with the high change frequency, the device information version number may remain unchanged, and is still 00000001; and if the account ID is changed at t3, the device information version number may be increased by 1 again and changed to 00000010.

In this embodiment of this application, considering that the device information with the high change frequency in the device information that corresponds to the second device and that is required for getting online may cause a frequent change of a corresponding device information version number, the following may be caused in a process in which the second device gets online, the first device often determines, based on the device information version number, that the device information that corresponds to the second device and that is required for getting online needs to be re-obtained from the second device. Therefore, when the device information version number is set only based on the device information with the medium change frequency in the device information that corresponds to the second device and that is required for getting online, in addition to the first version number, the first information may further include device information with a first change frequency. The device information with the first change frequency herein is device information with a high change frequency in the device information that currently corresponds to the second device and that is required for getting online. In other words, the second device may directly send, to the first device, the device information with the high change frequency in the device information that currently corresponds to the second device and that is required for getting online, so that the first device may not establish a connection to the second device. In this way, the device information with the high change frequency in the device information that corresponds to the second device and that is required for getting online can be obtained, so that the device information with the high change frequency in the device information that corresponds to the second device and that is currently stored in the first device and that is required for getting online can be updated.

It may be understood that the device information version number is associated with the device information with the medium change frequency in the device information that corresponds to the unified second device and that is required for getting online, or is associated with the device information with the medium change frequency and the device information with the high change frequency in the device information that corresponds to the unified second device and that is required for getting online. When any piece of device information changes, the device information version number also changes. Therefore, it is impossible to distinguish which specific device information changes. Therefore, to facilitate distinguishing between specific device information that changes, in some possible implementations, the device information version number may be divided into a plurality of independent parts, and each part may correspond to one or more pieces of device information. For example, the device information version number is associated with the device information with the medium change frequency in the device information that corresponds to the second device and that is required for getting online. The device information with the medium change frequency in the device information that corresponds to the second device and that is required for getting online may include a device name, a device UUID (universally unique identifier, universally unique identifier), a transport protocol, a Bluetooth MAC address, an account ID, and a feature supported by a soft neutral wire. A device information version number may be represented by using 12 bits, and the device name, the device UUID, the transport protocol, the Bluetooth MAC address, the account ID, and the feature supported by the soft neutral wire may sequentially occupy 2 bits. For example, as shown in FIG. 5C, at initial t0, the device information version number may be 000000000000. If the device name is changed at t1, a quantity of bits corresponding to the device name in the device information version number may be increased by 1, and the device information version number may be changed to 010000000000; if the transport protocol is changed at t2, a bit corresponding to the transport protocol in the device information version number may be increased by 1, and the device information version number may be changed to 010001000000; and if the account ID is changed at t3, a bit corresponding to the account ID in the device information version number may be increased by 1, and the device information version number may be changed to 010001000100.

It should be understood that, in the foregoing case in which the device information version number is divided into a plurality of independent parts, if two bits corresponding to a piece of device information in the device information version number are both 1s, when 1 is added next time, the two bits may be changed to 00, and the cycle starts again. Therefore, to avoid misjudgment caused by a change of a piece of device information, the device information may be associated by using a longer quantity of bits (for example, 4 bits may be occupied by each piece of device information). Correspondingly, a device information version number may correspond to more bits. Certainly, to save transmission resources, in some possible implementations, a most appropriate quantity of bits may alternatively be determined for one piece of device information based on a change frequency of the device information, so that fewer bits are occupied as much as possible without causing a misjudgment. For example, most appropriate quantities of bits corresponding to different change frequencies ranges may be determined in advance through testing or calculation. Based on this, a corresponding quantity of bits may be determined for each piece of device information based on a change frequency (for example, an average change frequency) of the device information. A higher change frequency indicates a larger quantity of bits occupied.

In some possible implementations, to further save transmission resources, a plurality of pieces of device information may alternatively be associated with a same bit. For example, it is assumed that the device information version number is represented by using 12 bits. The device name and the device UUID may be associated with the first four bits, the transport protocol and the Bluetooth MAC address may be associated with the middle four bits, and the account ID and the feature supported by the soft neutral wire may be associated with the last four bits. In this way, a quantity of bits that need to be transmitted can be reduced, and transmission resources can be saved. Further, when a plurality of pieces of device information are associated with the same bit, when any piece of device information in the plurality of pieces of device information changes, a value of a corresponding bit in a device information version number is increased by 1. Therefore, which piece of device information in the plurality of pieces of device information changes may not be determined, and a connection needs to be established to re-obtain the plurality of device information. Based on this, in some embodiments, the device information with the medium change frequency in the device information that corresponds to the second device and that is required for getting online may be further classified, and device information with a high change frequency (for example, higher than a threshold 1) may be independently associated with a plurality of bits; and for device information with a low change frequency (for example, lower than a threshold 1), a plurality of pieces of device information may be associated with a plurality of bits.

It can be learned from the foregoing description that, in this embodiment of this application, the device information version number may be set in a plurality of possible manners, and flexibility is high. The device information version number may be set based on an actual situation, to save transmission resources as much as possible while avoiding misjudgment.

It may be understood that, for different cases, device information required for a device to get online may be different. For example, for different device types (such as a spinning bike, a smart screen, and a robotic vacuum cleaner), or different devices of a same device type (for example, different devices are configured), device information required for the device to get online may be different. Therefore, in this embodiment of this application, for different cases, when the device information version number is divided into a plurality of parts, a unified device information version number format may be used. If a device does not have corresponding device information, a corresponding bit may be padded with 0. Certainly, in some possible implementations, to save transmission resources, different device information version number formats may also be used in a targeted manner.

The foregoing content describes the first verification data, the first version number, and the like. The following describes, by using an example, a case in which the second device sends the identification information of the second device and the first information.

In some possible implementations, the second device may periodically send the identification information of the second device and the first information, so that another device (for example, the first device) can discover the second device. For example, the second device may periodically send a broadcast packet (for example, a BLE broadcast packet) or a multicast packet, (for example, a CoPA (constrained application protocol) multicast packet). The broadcast packet or the multicast packet may carry the identification information of the second device and the first information. In addition to actively sending the identification information of the second device and the first information, the second device may further respond to a request of another device, and then send the identification information of the second device and the first information to the corresponding device. For example, the first device may send a discovery packet in a broadcast manner, a multicast manner, or the like. The discovery packet may include related information of the first device (for example, a name and a device type of a device A). The second device may receive the discovery packet sent by the first device, and may send a discovery response packet to the first device based on the discovery packet. The discovery response packet may include the identification information of the second device and the first information. For example, FIG. 4 is a diagram of a packet structure of a Bluetooth low energy (Bluetooth low energy, BLE) broadcast packet sent by the first device. As shown in FIG. 4, the first device may include the device information with the first change frequency, the first version number, and the first verification data in a data field of the BLE broadcast packet. It should be understood that the structure of the BLE broadcast packet shown in FIG. 4 is merely an example for description, and does not constitute a limitation. For example, in addition to the three pieces of information, the data field may further include more or less information, for example, may further include the identification information of the second device. It should be further understood that, for another communication manner such as Wi-Fi or Ethernet, the three pieces of information: the device information with the first change frequency, the first version number, and the first verification data may also be carried in a data field of a Wi-Fi packet or an Ethernet packet. This is not limited herein.

It should be noted that, in addition to the first verification data and the first version number (and the device information with the first change frequency), the first information may further include more content, for example, a device type of the second device and a vendor identifier of the second device. This is not limited in this application; and the first information may be set based on an actual requirement.

302: The first device determines, based on the first verification data, whether the communication key that corresponds to the second device and that is currently stored is valid, and determines, based on the first version number, whether the device information that corresponds to the second device and that is currently stored and that is required for getting online is valid.

It should be understood that, after receiving the identification information of the second device and the first information that are sent by the second device, the first device may determine, based on the identification information of the second device, that the first information is associated with the second device, and then, the first device may determine, based on the first verification data in the first information, whether the communication key that corresponds to the second device and that is currently stored is valid, and may determine, based on the first version number in the first information, whether the device information that corresponds to the second device and that is currently stored and that is required for getting online is valid. When the first device determines that the communication key that corresponds to the second device and that is currently stored in the first device is valid, but the device information that corresponds to the second device and that is required for getting online is invalid (invalid) or partially invalid, the first device needs to establish a connection to the second device to obtain invalid device information, and step 303 may be performed. When the first device determines that the device information that corresponds to the second device and that is currently stored in the first device and that is required for getting online is valid, but the communication key corresponding to the second device is invalid, the first device needs to establish a connection to the second device to perform device authentication on the second device, and negotiate a new communication key, and step 305 may be performed. When the first device determines that the communication key that corresponds to the second device and that is currently stored in the first device is valid, and the device information that corresponds to the second device and that is required for getting online is valid, the first device may directly get the second device online, and step 310 may be directly performed. When the first device determines that the communication key that corresponds to the second device and that is currently stored in the first device is invalid, and the device information that corresponds to the second device and that is required for getting online is invalid or partially invalid, the first device needs to establish a connection to the second device to perform device authentication on the second device, negotiate a new communication key, and need to obtain invalid device information, and step 307 may be directly performed.

The following describes, by using an example, a case in which the first device determines, based on the first Bloom encoding vector when the first verification data is the first Bloom encoding vector, whether the communication key that corresponds to the second device and that is currently stored is valid.

Specifically, the first device may obtain one or more corresponding hash values (first hash values) based on the first hash function and the communication key that corresponds to the second device and that is currently stored, and then may check whether a value of a bit corresponding to the one or more hash values in the first Bloom encoding vector is 1. If the values are all 1s, it may be considered that the communication key that corresponds to the second device and that is currently stored in the first device is valid. If the values are not all 1s, that is, a value corresponding to at least one bit is 0, it may be considered that the communication key that corresponds to the second device and that is currently stored in the first device is invalid. For example, it is assumed that the first Bloom encoding vector is 101001000...10, the first hash function includes three hash functions: a hash function 1, a hash function 2, and a hash function 3, and the communication key that corresponds to the second device and that is currently stored in the first device is the communication key 1. The first device may obtain, through calculation according to the hash function 1, the hash function 2, and the hash function 3, three hash values corresponding to the communication key 1, for example, 0, 2, and 10. Then, the first device may determine values corresponding to the 0^{th} bit, the 2^{nd} bit, and the 10^{th} bit in the first Bloom encoding vector are all 1s, so that it can be determined that the communication key that corresponds to the second device and that is currently stored in the first device is valid.

The following describes an example in which the first device determines, based on the first version number, whether the device information that corresponds to the second device and that is currently stored and that is required for getting online is valid.

In this embodiment of this application, there are a plurality of manners of setting the device information version number. Therefore, there are a plurality of cases in which the first device determines, based on the first version number, whether the device information that corresponds to the second device and that is currently stored and that is required for getting online is valid. The following provides two examples. In a first example, the device information version number is associated with only the device information with the medium change frequency in the device information that corresponds to the second device and that is required for getting online. In a second example, the device information version number is associated with the device information with the medium change frequency and the device information with the high change frequency in the device information that corresponds to the second device and that is required for getting online. Certainly, on the basis of the foregoing two manners, further differentiation may be made. For example, the device information version number is associated as a whole with the device information with the medium change frequency in the device information that corresponds to the second device and that is required for getting online, or may be divided into different parts, and the different parts may be respectively associated with some of the device information.

First, in the foregoing first manner, a case in which the device information version number is associated with the device information with the medium change frequency in the device information that corresponds to the unified second device and that is required for getting online is described by using an example. In this case, the first device may determine, based on the first version number and a second version number, whether the device information with the medium change frequency in the device information that corresponds to the second device and that is currently stored in the first device and that is required for getting online is valid. The second version number may be a device information version number corresponding to the device information with the medium change frequency in the device information that corresponds to the second device and that is currently stored in the first device and that is required for getting online. Specifically, if the first version number is the same as the second version number, the first device may determine that the device information with the medium change frequency in the device information that corresponds to the second device and that is currently stored in the first device and that is required for getting online is the same as the device information with the medium change frequency in the device information that currently corresponds to the second device and that is required for getting online, that is, it may be determined that the device information with the medium change frequency in the device information that corresponds to the second device and that is currently stored in the first device and that is required for getting online is valid. On the contrary, if the first version number is different from the second version number, the first device may determine that the device information with the medium change frequency in the device information that corresponds to the second device and that is currently stored in the first device and that is required for getting online is invalid. For example, as shown in FIG. 5B, the device information version number may be 8 bits. It is assumed that a current moment is a moment t3. In this case, the first version number may be 00000010. However, the first device currently stores the device information with the medium change frequency in the device information that corresponds to the second device and that is required for getting online at the previous moment t1. The second version number may be 00000001. Therefore, the first device may determine, based on the first version number and the second version number, that the device information with the medium change frequency in the device information that corresponds to the second device and that is currently stored in the first device and that is required for getting online is invalid.

Second, in the foregoing first manner, a case in which the device information version number may be divided into a plurality of parts, and each part may be associated with one or more pieces of the device information with the medium change frequency in the device information that corresponds to the second device and that is required for getting online is described by using an example. In this case, the first device may separately determine, based on different parts in the first version number and the second version number, whether device information corresponding to the parts is valid. The second version number may be a device information version number corresponding to the device information with the medium change frequency in the device information that corresponds to the second device and that is currently stored in the first device and that is required for getting online. Specifically, if a part corresponding to the first version number is the same as a part corresponding to the second version number, the first device may determine device information corresponding to the part in the device information with the medium change frequency in the device information that corresponds to the second device and that is currently stored in the first device and that is required for getting online is the same as device information corresponding to the part in the device information with the medium change frequency in the device information that currently corresponds to the second device and that is required for getting online, that is, may determine that the device information corresponding to the part in the device information with the medium change frequency in the device information that corresponds to the second device and that is currently stored in the first device and that is required for getting online is valid. On the contrary, if the part corresponding to the first version number is different from the part corresponding to the second version number, the first device may determine that the device information corresponding to the part in the device information with the medium change frequency in the device information that corresponds to the second device and that is currently stored in the first device and that is required for getting online is invalid. For example, as shown in FIG. 5C, the device information version number may be 12 bits, and the device name, the device UUID, the transport protocol, the Bluetooth MAC address, the account ID, and the feature supported by the soft neutral wire may sequentially occupy 2 bits. It is assumed that a current moment is a moment t3. In this case, the first version number may be 010001000100. However, the first device currently stores the device information with the medium change frequency in the device information that corresponds to the second device and that is required for getting online at the previous moment t1, and the second version number may be 010000000000. Therefore, the first device may determine, based on the first version number and the second version number, that a part corresponding to the transport protocol is different from a part corresponding to the account ID, that is, may determine that the transport protocol and the account ID are invalid, or may determine that the device information such as the device name, the device UUID, the Bluetooth MAC address, and the feature supported by the soft neutral wire is valid. In this way, the first device may re-obtain only the transport protocol and the account ID that currently correspond to the second device, and may not need to re-obtain the device name, the device UUID, the Bluetooth MAC address, and the feature supported by the soft neutral wire that correspond to the second device, thereby saving transmission resources. The foregoing is described by using an example in which each part obtained through division in the device information version number is associated with one piece of device information. However, in this embodiment of this application, one part obtained through division in the device information version number may also be associated with a plurality of pieces of device information. In this case, whether the plurality of pieces of device information are valid may be determined based on the parts in the first version number and the second version number.

Next, in the second manner, a case in which the device information version number is associated with the device information with the medium change frequency and the device information with the high change frequency in the device information that corresponds to the unified second device and that is required for getting online is described by using an example. In this case, the first device may determine, based on the first version number and the second version number, whether the device information with the medium change frequency and the device information with the high change frequency in the device information that corresponds to the second device and that is currently stored in the first device and that is required for getting online are valid. The second version number may be a device information version number corresponding to the device information with the medium change frequency and the device information with the high change frequency in the device information that corresponds to the second device and that is currently stored in the first device and that is required for getting online. Specifically, if the first version number is the same as the second version number, the first device may determine that the device information with the medium change frequency and the device information with the high change frequency in the device information that corresponds to the second device and that is currently stored in the first device and that is required for getting online is the same as the device information with the medium change frequency and the device information with the high change frequency in the device information that currently corresponds to the second device and that is required for getting online, that is, it may be determined that the device information with the medium change frequency and the device information with the high change frequency in the device information that corresponds to the second device and that is currently stored in the first device and that is required for getting online is valid. On the contrary, if the first version number is different from the second version number, the first device may determine that the device information with the medium change frequency and the device information with the high change frequency in the device information that corresponds to the second device and that is currently stored in the first device and that is required for getting online is invalid.

It should be understood that, a case in which in the foregoing second manner, the device information version number may be divided into a plurality of parts, and each part may be separately associated with one or more pieces of device information in the device information with the medium change frequency and the device information with the high change frequency in the device information that corresponds to the second device and that is required for getting online is similar to a case in which in the foregoing first manner, each part may be separately associated with one or more pieces of the device information with the medium change frequency in the device information that corresponds to the second device and that is required for getting online. For details, refer to related descriptions corresponding to the first manner. Details are not described herein again.

It should be noted that, in some cases (for example, the storage space of the first device is formatted, or the communication key is deleted after the maximum validity period expires), even if the second device has gotten online on the first device before, the first device may not locally store the communication key corresponding to the second device, and/or device information that corresponds to the second device and that is required for getting online. In this case, the device information may be considered as a communication key that corresponds to the second device and that is currently stored in the first device, and/or device information with a medium change frequency in the device information that corresponds to the second device and that is required for getting online is invalid (or the device information with the medium change frequency and the device information with the high change frequency in the device information that corresponds to the second device and that is required for getting online are invalid), and the first device subsequently needs to establish a connection to the second device, then, perform authentication on the second device, and/or obtain device information that currently corresponds to the current second device and that is required for getting online.

303: The first device establishes a connection to the second device.

When the first device determines that the communication key that corresponds to the second device and that is currently stored in the first device is valid, but the device information that corresponds to the second device and that is required for getting online is invalid or partially invalid, the first device may establish a connection to the second device, to obtain the device information that currently corresponds to the second device and that is required for getting online; and get the second device online. It should be understood that, if the first device determines that the communication key that corresponds to the second device and that is currently stored in the first device is valid, it indicates that the first device previously performs authentication on the second device, and the communication key obtained through negotiation can still be used. Therefore, in this case, the current communication key may continue to be used, so that a quantity of connection establishment times is reduced, and a probability of a signal conflict between devices can be reduced.

304: The first device obtains the device information that currently corresponds to the second device and that is required for getting online.

After a communication connection (for example, a Bluetooth connection or a Wi-Fi connection) is established between the first device and the second device, the first device may obtain device information that currently corresponds to the second device and that is required for getting online. In a process of obtaining the device information that currently corresponds to the second device and that is required for getting online, the first device and the second device may perform encrypted communication by using a communication key.

In this embodiment of this application, there are a plurality of manners of setting the device information version number. Therefore, there are a plurality of cases in which the first device obtains the device information that currently corresponds to the second device and that is required for getting online.

In the foregoing first manner, when the device information version number is associated with the device information with the medium change frequency in the device information that corresponds to the unified second device and that is required for getting online, the first device may obtain only the device information with the medium change frequency in the device information that currently corresponds to the second device and that is required for getting online. The device information with the high change frequency in the device information that currently corresponds to the second device and that is required for getting online may be carried in the first information, and the first device may obtain the device information from the first information.

In the foregoing second manner, when the device information version number is associated with the device information with the medium change frequency and the device information with the high change frequency in the device information that corresponds to the unified second device and that is required for getting online, the first device may obtain the device information with the medium change frequency and the device information with the high change frequency in the device information that currently corresponds to the second device and that is required for getting online.

In the foregoing first manner, when the device information version number may be divided into a plurality of parts, and each part may be separately associated with one or more pieces of device information in the device information with the medium change frequency in the device information that corresponds to the second device and that is required for getting online, the first device may obtain only invalid device information in the device information with the medium change frequency in the device information that corresponds to the second device and that is required for getting online. For example, as shown in FIG. 5C, it is assumed that the first version number may be 010001000100, and the second version number may be 010000000000. In this case, the first device may determine that the two pieces of device information, namely, the transport protocol and the account ID, that correspond to the second device are invalid, and device information that corresponds to the second device, like the device name, the device UUID, the Bluetooth MAC address, and the feature supported by the soft neutral wire is valid. Therefore, the first device may re-obtain only the two pieces of device information, namely, the transport protocol and the account ID, that currently correspond to the second device.

Similarly, in the foregoing second manner, when the device information version number may be divided into a plurality of parts, and each part may be separately associated with one or more pieces of device information in the device information with the medium change frequency and the device information with the high change frequency in the device information that corresponds to the second device and that is required for getting online, the first device may obtain only invalid device information in the device information with the medium change frequency and the device information with the high change frequency in the device information that corresponds to the second device and that is required for getting online.

It should be noted that, in this embodiment of this application, after the first device establishes the connection to the second device, a manner in which the first device obtains the device information that corresponds to the second device and that is required for getting online is not limited. For example, the first device may send a device information obtaining request to the second device, and the device information obtaining request may indicate to obtain all or some information. Correspondingly, the second device may receive the device information obtaining request from the first device, and then the second device may send the corresponding device information to the first device based on the device information obtaining request.

It should be further noted that, in some cases (for example, storage space of the first device is formatted), even if the second device has gotten online on the first device before, the first device may not locally store device information whose change frequency is "unchanged" in the device information that corresponds to the second device and that is required for getting online. In this case, in addition to obtaining the device information with the medium change frequency and the like in the device information that corresponds to the second device and that is required for getting online, the first device may further obtain device information whose change frequency is "unchanged" in the device information that corresponds to the second device and that is required for getting online.

305: The first device establishes a connection to the second device.

When the first device determines that the device information that corresponds to the second device and that is currently stored in the first device and that is required for getting online is valid, but the communication key corresponding to the second device is invalid, the first device may establish a connection to the second device, so that the first device performs re-authentication on the second device and negotiates a new communication key; and then get the second device online.

306: The first device performs authentication on the second device, and negotiates a new communication key.

After a communication connection (for example, a Bluetooth connection or a Wi-Fi connection) is established between the first device and the second device, the first device may perform authentication on the second device to obtain a new communication key through negotiation. In this embodiment of this application, an authentication manner between the first device and the second device is not limited. For example, the first device may perform authentication on, according to a trust circle mechanism, whether the second device is trustworthy. In some possible implementations, the first device may perform authentication on the second device via a HiChain module. It should be further noted that, in some possible authentication manners, the second device may further dynamically generate related information (such as a PIN code or a QR code), and the first device may perform authentication on the second device by receiving a PIN code entered by the user, a scanned QR code, or the like. It should be understood that, in some cases, authentication performed by the first device on the second device may fail, and consequently, a get-online procedure is terminated, and the first device cannot get the second device online.

It may be understood that, in some cases, the second device may also perform authentication on the first device, that is, the first device and the second device need to perform two-way authentication.

In some possible implementations, the communication key may be stored via a keystore. Keystore is a key management tool that helps users create, store, and manage keys.

307: The first device establishes a connection to the second device.

When the first device determines that the communication key that corresponds to the second device and that is currently stored in the first device is invalid, and the device information that corresponds to the second device and that is required for getting online is invalid or partially invalid, the first device may establish a connection to the second device, so that the first device performs re-authentication on the second device, negotiates a new communication key, and obtains invalid device information in the device information that corresponds to the second device and that is required for getting online; and then get the second device online.

308: The first device performs authentication on the second device, and negotiates a new communication key.

After a communication connection (for example, a Bluetooth connection or a Wi-Fi connection) is established between the first device and the second device, the first device may perform authentication on the second device to obtain a new communication key through negotiation.

309: The first device obtains the device information that currently corresponds to the second device and that is required for getting online.

After the first device and the second device negotiate a new communication key, the first device may obtain, based on the new communication key, device information that currently corresponds to the second device and that is required for getting online.

310: The first device gets the second device online.

When the first device locally stores the valid communication key corresponding to the second device and the valid device information that corresponds to the second device and that is required for getting online, the first device may get the second device online.

Then, when operations such as cross-device transfer, file sharing, and multi-screen collaboration need to be performed between the first device and the second device, the first device may establish a connection to the second device based on locally stored related information (such as a Bluetooth MAC address and an IP address) of the second device, and perform encrypted communication based on the valid communication key. For example, if the first device has a display module (for example, a display), after the first device gets the second device online, the user may view, via the display module of the first device, that the second device is newly added to devices that have currently gotten online.

It should be noted that, after the first device gets the second device online, the first device may keep the second device alive by sending a BLE broadcast packet (for example, sending a BLE broadcast packet to the second device every 5 minutes, to require the second device to respond) or according to a keepalive mechanism of TCP (for example, a periodicity is 5 minutes), to detect whether the second device can perform communication, whether the second device is online, and the like. For example, if it is determined that the second device cannot perform communication or get offline (for example, the second device responds to the BLE broadcast packet or the ack packet sent to the second device at an interval of three times), the user may view, via the display module of the first device, that the second device is removed from the device that currently gets online.

Optionally, in some possible implementations, before performing step 302, the first device may first determine whether a potential trusted relationship exists between the first device and the second device. If the potential trusted relationship exists, the first device may perform step 302; or if the potential trusted relationship does not exist, the first device may perform steps 307 to 310 to get the second device online. Alternatively, in some possible implementations, when the potential trusted relationship does not exist, the first device may determine, based on the first version number, whether the device information that corresponds to the second device and that is currently stored in the first device and that is required for getting online is valid. If the device information is valid, step 305, step 306, and step 310 may be performed, the second device gets online; or if the device information is invalid or partially invalid, the second device may get online by performing steps 307 to 310. In other words, when the potential trusted relationship does not exist between the first device and the second device, even if the first device determines, based on the first verification data, that the communication key that corresponds to the second device and that is currently stored in the first device is valid, the first device still needs to establish a connection to the second device, perform re-authentication on the second device, and negotiate a new communication key.

The following provides an example of a possible manner of determining whether a potential trusted relationship exists between the first device and the second device. In a first manner, the first device may locally store a trusted device list, and the trusted device list may include identification information of one or more devices. If the trusted device list includes the identification information of the second device, it may be considered that the potential trusted relationship exists between the first device and the second device; otherwise, it may be considered that the potential trusted relationship does not exist between the first device and the second device. Identification information of a device in a potential trusted list is not limited in embodiments of this application. For example, the identification information may be preconfigured, or may be dynamically generated (for example, identification information of a previously successfully authenticated device is added, and a time period is set). In a second manner, the first device may determine, based on the identification information of the second device, whether the second device and the first device log in to a same account. In this case, the first device may request a corresponding device list from an account management server based on a currently logged-in-to account, and the device list may include identification information of all devices that log in to a same account as the first device. The first device may check whether the device list includes the identification information of the second device. If the device list includes the identification information of the second device, it may be considered that the potential trusted relationship exists between the first device and the second device; or if the device list does not include the identification information of the second device, it may be considered that the potential trusted relationship does not exist between the first device and the second device. It should be understood that the foregoing two manners are merely examples for description, and constitute no limitation thereto.

It may be understood that, in some embodiments, the first device may alternatively send, to the second device, identification information of the first device, a Bloom encoding vector generated based on a valid communication key currently stored in the first device, and a device information version number of device information that currently corresponds to the first device and that is required for getting online, so that the second device gets the first device online at a plurality of levels. For example, the first device may periodically send corresponding information in a broadcast manner. For another example, the first device may send corresponding information to the first device after getting the second device online.

In the foregoing processing procedure, when the first device does not establish a connection to the second device, the second device may send the identification information of the second device, the first verification data, and the first version number, the first device may receive the identification information of the second device, the first verification data, and the first version number that are sent by the second device, and the first device may hierarchically get the second device online based on the identification information of the second device, the first verification data, and the first version number. As shown in the following Table 2, there may be three levels.

**Table 2**

| Level | Communication key and device information | Get-online mode | Time required for getting online |
|---|---|---|---|
| 1 | The communication key corresponding to the second device is valid, and the device information that corresponds to the second device and that is required for getting online is valid | Directly get online without establishing a connection to the second device | 1s |
| 2 | The communication key corresponding to the second device is valid, and the device information that corresponds to the second device and that is required for getting online is invalid or partially invalid | Establish a connection to the second device, and get online after obtaining invalid device information in the device information that corresponds to the second device and that is required for getting online | 2s |
| 3 | The communication key corresponding to the second device is invalid, and the device information that corresponds to the second device and that is required for getting online is valid | Establish a connection to the second device, perform authentication on the second device, and get online after obtaining a new communication key through negotiation | 3s |
| 4 | The communication key corresponding to the second device is invalid, and the device information that corresponds to the second device and that is required for getting online is invalid or partially invalid | Establish a connection to the second device, perform authentication on the second device, obtain a new communication key through negotiation, and get online after obtaining invalid device information in the device information that corresponds to the second device and that is required for getting online | 4s |

It can be learned that, based on an actual status of the communication key and the device information, hierarchical get-online may be performed. Time required for getting online is sequentially a level 1, a level 2, a level 3, and a level 4 in an ascending order. For example, the level 1 requires about 1 second (s), the layer 2 requires about 2s, the layer 3 requires about 3s, and the layer 4 requires about 4s. In this hierarchical get-online manner, a quantity of connection establishment times and information that needs to be exchanged can be reduced as much as possible, thereby greatly shortening time required for getting online, and improving user experience. In the case of a plurality of devices, the network can be quickly established between the plurality of devices, meeting user requirements. In addition, a manner of associating the device information version number with the device information is set, so that the first device can quickly determine, when a small quantity of transmission resources are occupied, whether the first device needs to query and obtain the related device information of the second device. In addition, in this hierarchical get-online manner, a quantity of connection establishment times, a quantity of times of obtaining device information, and a quantity of authentication times can be reduced. Therefore, power consumption of the first device and the second device can be further reduced.

In the embodiment corresponding to FIG. 3, the first information may include both the first verification data and the first version number. However, it should be understood that, in some other embodiments of this application, the first information may alternatively include only one of the first verification data and the first version number, that is, include only the first verification data or the first version number. The following separately describes processing procedures in the two cases by using examples.

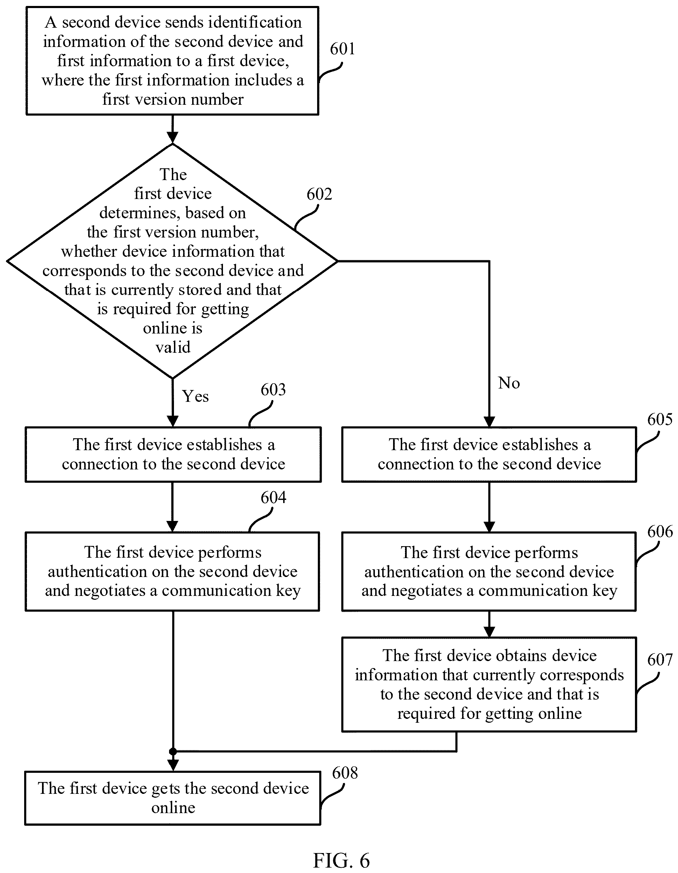

FIG. 6 is a schematic flowchart of another communication method according to an embodiment of this application. FIG. 6 corresponds to a case in which only the first version number is included. As shown in FIG. 6, the method may include but is not limited to the following steps.

601: A second device sends identification information of the second device and first information to a first device, where the first information includes a first version number.

For the identification information of the second device and the first version number, refer to related descriptions in step 301.

602: The first device determines, based on the first version number, whether device information that corresponds to the second device and that is currently stored and that is required for getting online is valid. If the device information is valid, step 603 may be performed; or if the device information is invalid or partially invalid, step 605 may be performed.

After receiving the identification information of the second device and the first information that are sent by the second device, the first device may determine, based on the identification information of the second device, that the first information is associated with the second device, and the first device may determine, based on the first version number in the first information, whether the device information that corresponds to the second device and that is currently stored and that is required for getting online is valid. When the first device determines that the device information that corresponds to the second device and that is currently stored in the first device and that is required for getting online is valid, the first device needs to establish a connection to the second device to perform device authentication on the second device and negotiate a communication key, and step 603 may be performed. When the first device determines that the device information that corresponds to the second device and that is currently stored in the first device and that is required for getting online is invalid or partially invalid, the first device needs to establish a connection to the second device to perform device authentication on the second device, negotiate a communication key, and needs to obtain invalid device information, and step 605 may be performed.

For a specific manner in which the first device determines, based on the first version number, whether the device information that corresponds to the second device and that is currently stored and that is required for getting online is valid, refer to related descriptions in step 302.

603: The first device establishes a connection to the second device.

604: The first device performs authentication on the second device and negotiates a communication key.

Step 603 and step 604 are respectively similar to step 305 and step 306. For details, refer to related descriptions in step 305 and step 306. Details are not described herein again.

605: The first device establishes a connection to the second device.

606: The first device performs authentication on the second device and negotiates a communication key.

607: The first device obtains device information that currently corresponds to the second device and that is required for getting online.

Steps 605 to 607 are similar to steps 307 to 309. For details, refer to related descriptions in steps 307 to 309. Details are not described herein again.

608: The first device gets the second device online.

When the first device locally stores the valid communication key corresponding to the second device and the valid device information that corresponds to the second device and that is required for getting online, the first device may get the second device online.

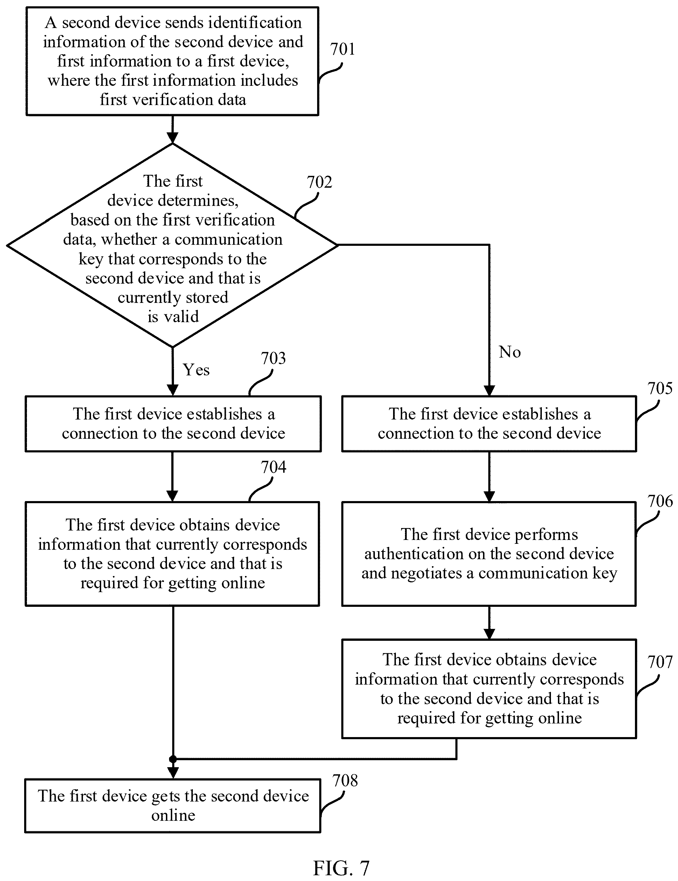

FIG. 7 is a schematic flowchart of still another communication method according to an embodiment of this application. FIG. 7 corresponds to a case in which only the first verification data is included. As shown in FIG. 7, the method may include but is not limited to the following steps.

701: A second device sends identification information of the second device and first information to a first device, where the first information includes first verification data.

For the identification information of the second device and the first verification data, refer to related descriptions in step 301.

702: The first device determines, based on the first verification data, whether a communication key that corresponds to the second device and that is currently stored is valid. If the communication key is valid, step 703 may be performed; or if the communication key is invalid, step 705 may be performed.

After receiving the identification information of the second device and the first information that are sent by the second device, the first device may determine, based on the identification information of the second device, that the first information is associated with the second device, and the first device may determine, based on the first verification data in the first information, whether the communication key that corresponds to the second device and that is currently stored is valid. When the first device determines that a communication key that corresponds to the second device and that is currently stored in the first device is valid, the first device needs to establish a connection to the second device, and obtain device information that currently corresponds to the second device and that is required for getting online, and step 703 may be performed. When the first device determines that the communication key that corresponds to the second device and that is currently stored in the first device is invalid, the first device needs to establish a connection to the second device to perform device authentication on the second device, negotiate a communication key, and needs to obtain device information that currently corresponds to the second device and that is required for getting online, step 605 may be performed.

For a specific manner in which the first device determines, based on the first verification data, whether the communication key that corresponds to the second device and that is currently stored is valid, refer to related descriptions in step 302.

703: The first device establishes a connection to the second device.

704: The first device obtains the device information that currently corresponds to the second device and that is required for getting online.

Step 703 and step 704 are respectively similar to step 303 and step 304. For details, refer to related descriptions in step 303 and step 304. Details are not described herein again.

705: The first device establishes a connection to the second device.

706: The first device performs authentication on the second device and negotiates a communication key.

707: The first device obtains the device information that currently corresponds to the second device and that is required for getting online.

Steps 605 to 607 are similar to steps 307 to 309. For details, refer to related descriptions in steps 307 to 309. Details are not described herein again.

708: The first device gets the second device online.

When the first device locally stores the valid communication key corresponding to the second device and the valid device information that corresponds to the second device and that is required for getting online, the first device may get the second device online.

It should be understood that, in the embodiments corresponding to FIG. 3, FIG. 6, and FIG. 7, an example in which the first device and the second device are used as execution bodies of the interaction diagram is mainly used to illustrate the foregoing processing procedure. However, the execution bodies of the interaction diagram are not limited in this application. For example, the first device and the second device in FIG. 3, FIG. 6, and FIG. 7 may alternatively be chips, chip systems, or processors that support the first device and the second device in implementing the method, or may be logical modules or software that can implement all or some functions of the first device and the second device.

In a possible implementation, the first device and the second device may include software modules such as a soft bus, an authentication module (for example, a HiChain module), and a distributed application (for example, a super terminal, a distributed device center, and a cross-end fusion center). The following provides an example of the method embodiment corresponding to FIG. 3 from perspectives of a soft bus, an authentication module, and a distributed application.

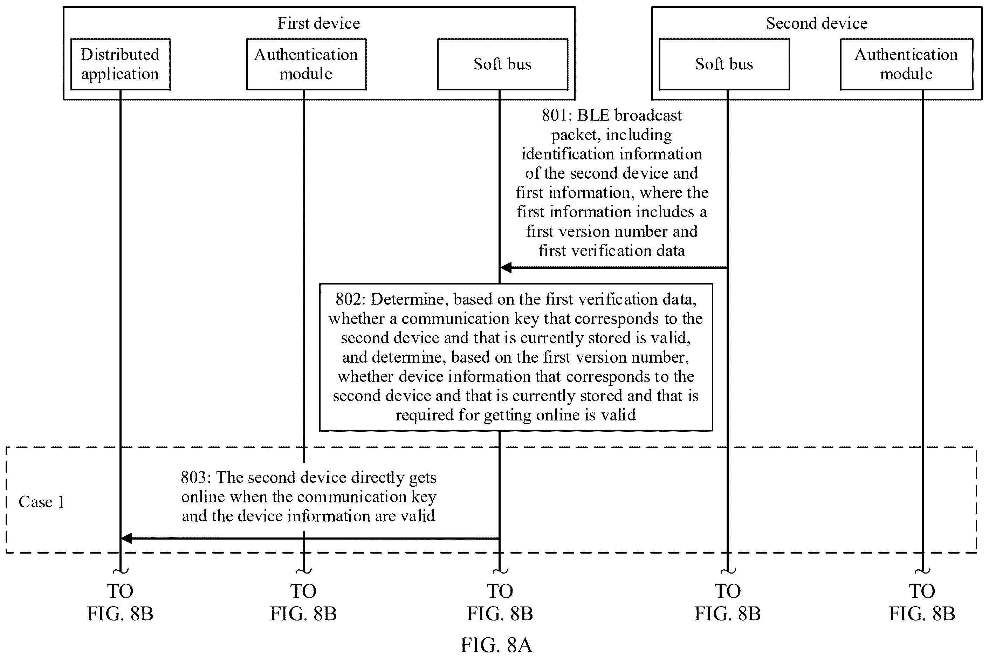

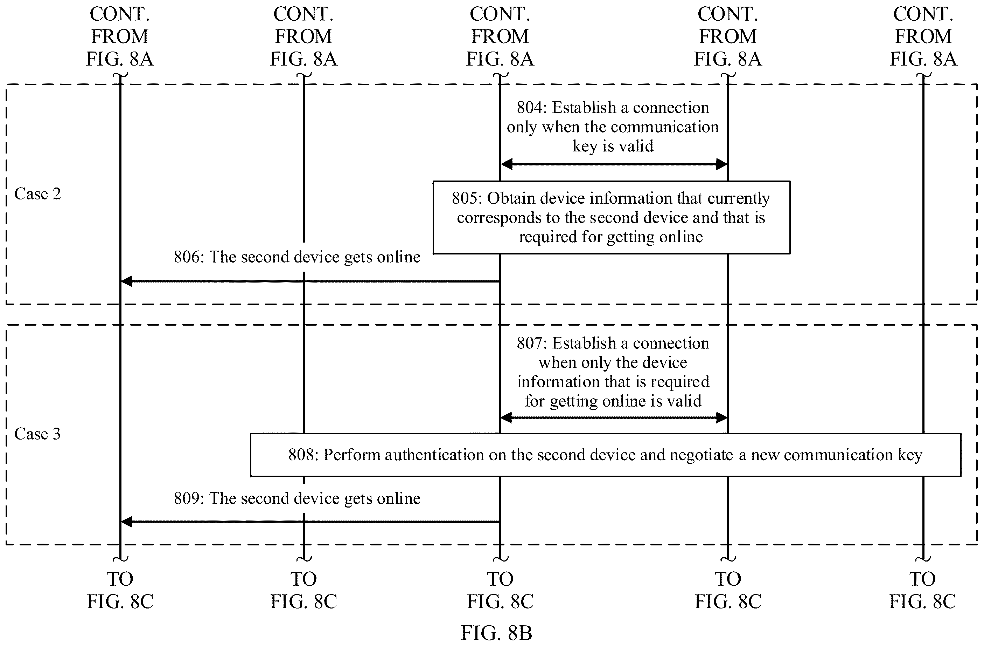

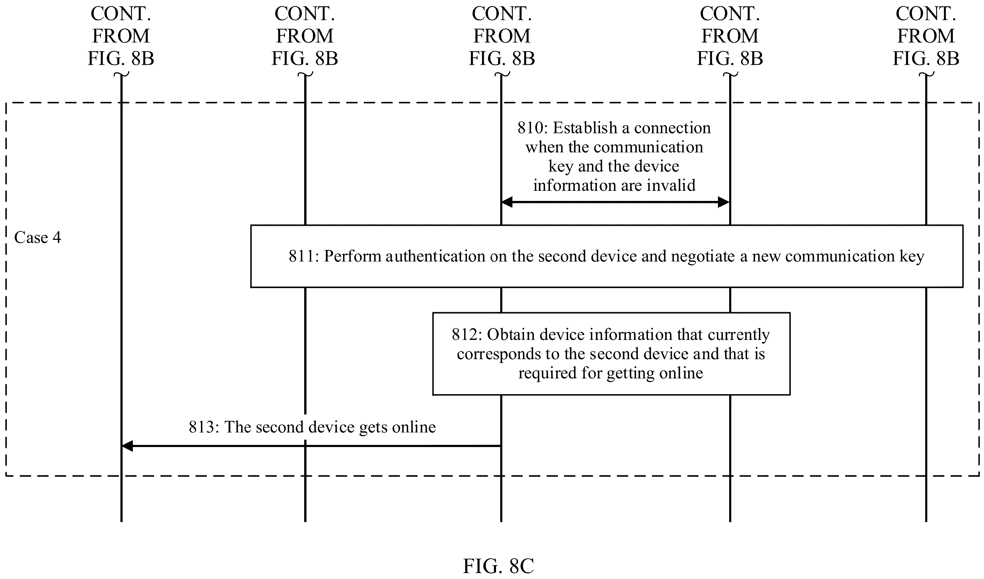

FIG. 8A to FIG. 8C are a schematic flowchart of yet another communication method according to an embodiment of this application. As shown in FIG. 8A to FIG. 8C, the method may include but is not limited to the following steps.

801: A soft bus module of a second device sends a BLE broadcast packet, where the BLE broadcast packet includes identification information of the second device and first information, and the first information includes a first version number and first verification data.

For example, the soft bus module of the second device may periodically perform broadcasting, that is, periodically send the BLE broadcast packet. The BLE broadcast packet may include the identification information of the second device and the first information, and the first information may include the first version number and the first verification data. Correspondingly, a soft bus module of a first device may receive the BLE broadcast packet sent by the soft bus module of the second device.

For detailed descriptions of the identification information of the second device, the first version number, and the first verification data, refer to related descriptions in step 301.

It may be understood that the soft bus module of the second device may also perform broadcasting in another manner, for example, Wi-Fi, Ethernet, or UWB.

802: The soft bus module of the first device determines, based on the first verification data, whether a communication key that corresponds to the second device and that is currently stored is valid, and determines, based on the first version number, whether device information that corresponds to the second device and that is currently stored and that is required for getting online is valid. When both the communication key and the device information are valid, a processing procedure corresponding to the case 1 may be performed. When only the communication key is valid, a processing procedure corresponding to the case 2 may be performed. When only the device information required for getting online is valid, a processing procedure corresponding to the case 3 may be performed. When both the communication key and the device information are invalid, a processing procedure corresponding to the case 4 may be performed.

After receiving the identification information of the second device and the first information that are sent by the soft bus module of the second device, the soft bus module of the first device may determine, based on the identification information of the second device, that the first information is associated with the second device, and then, the soft bus module of the first device may determine, based on the first verification data in the first information, whether the communication key that corresponds to the second device and that is currently stored is valid, and may determine, based on the first version number in the first information, whether the device information that corresponds to the second device and that is currently stored and that is required for getting online is valid. In this way, get-online can be performed at a plurality of levels. Specifically, four cases may be included. Case 1 may be that both the communication key and the device information are valid, that is, the communication key that corresponds to the second device and that is currently stored in the first device is valid, and the device information that corresponds to the second device and that is currently stored and that is required for getting online is valid. Case 2 may be that only the communication key that corresponds to the second device and that is currently stored in the first device is valid. Case 3 may be that only the device information that corresponds to the second device and that is currently stored and that is required for getting online is valid. Case 4 may be that both the communication key and the device information are invalid.

803: The soft bus module of the first device directly gets the second device online.

When the soft bus module of the first device determines that the communication key that corresponds to the second device and that is currently stored in the first device is valid, and the device information that corresponds to the second device and that is currently stored and that is required for getting online is valid, the soft bus module of the first device may directly get the second device online, and may notify the distributed application that the second device gets online, so that the distributed application can provide a corresponding service for a user.

804: The soft bus module of the first device establishes a connection to the soft bus module of the second device.

When the soft bus module of the first device determines that the communication key that corresponds to the second device and that is currently stored in the first device is valid, but the device information that corresponds to the second device and that is required for getting online is invalid or partially invalid, the soft bus module of the first device may establish a connection to the soft bus module of the second device, to obtain device information that currently corresponds to the second device and that is required for getting online; and get the second device online.

805: The soft bus module of the first device obtains the device information that currently corresponds to the second device and that is required for getting online.

After the soft bus module of the first device establishes a communication connection to the soft bus module of the second device, the soft bus module of the first device may obtain the device information that currently corresponds to the second device and that is required for getting online. In a process of obtaining the device information that currently corresponds to the second device and that is required for getting online, the soft bus module of the first device and the soft bus module of the second device may perform encrypted communication based on a communication key.

806: The soft bus module of the first device gets the second device online.

When the soft bus module of the first device obtains the device information that currently corresponds to the second device and that is required for getting online, the soft bus module of the first device may get the second device online, and may notify the distributed application that the second device gets online, so that the distributed application can provide a corresponding service for the user.

807: The soft bus module of the first device establishes a connection to the soft bus module of the second device.

When the soft bus module of the first device determines that the device information that corresponds to the second device and that is currently stored in the first device and that is required for getting online is valid, but the communication key corresponding to the second device is invalid, and the soft bus module of the first device may establish a connection to the soft bus module of the second device, to perform re-authentication on the second device, and negotiate a new communication key; and then get the second device online.

808: The soft bus module of the first device performs authentication on the second device, and negotiates the new communication key.

After the soft bus module of the first device establishes the connection to the soft bus module of the second device, the soft bus module of the first device may invoke an interface provided by the authentication module of the first device to perform authentication on the second device. Specifically, the authentication module of the first device may interact with the authentication module of the second device, to perform authentication on the second device. After the authentication succeeds, the authentication module of the first device and the authentication module of the second device may negotiate a new communication key. The authentication module of the first device may return the new communication key obtained through negotiation to the soft bus module of the first device, and the authentication module of the second device may also return the new communication key obtained through negotiation to the soft bus module of the second device. In this way, encrypted communication may be performed between the soft bus module of the first device and the soft bus module of the second device based on the communication key.

809: The soft bus module of the first device gets the second device online.

When the soft bus module of the first device receives the communication key returned by the authentication module of the first device, the soft bus module of the first device may get the second device online, and may notify the distributed application that the second device gets online, so that the distributed application can provide a corresponding service for the user.

810: The soft bus module of the first device establishes a connection to the soft bus module of the second device.

When the soft bus module of the first device determines that the communication key that corresponds to the second device and that is currently stored in the first device is invalid, and the device information that corresponds to the second device and that is required for getting online is invalid or partially invalid, the soft bus module of the first device may establish a connection to the soft bus module of the second device, so that the first device performs re-authentication on the second device, negotiates a new communication key, obtains invalid device information in the device information that corresponds to the second device and that is required for getting online; and then get the second device online.

811: An authentication module of the first device performs authentication on the second device, and negotiates a new communication key.

812: The soft bus module of the first device obtains the device information that currently corresponds to the second device and that is required for getting online.

When the soft bus module of the first device receives the communication key returned by the authentication module of the first device, the soft bus module of the first device may further obtain the device information that currently corresponds to the second device and that is required for getting online.

813: The soft bus module of the first device gets the second device online.

When the soft bus module of the first device obtains the device information that currently corresponds to the second device and that is required for getting online, the soft bus module of the first device may get the second device online, and may notify the distributed application that the second device gets online, so that the distributed application can provide a corresponding service for the user.

It should be understood that, actually, operations performed by the functional modules in FIG. 8A to FIG. 8C may be performed by a corresponding chip, chip system, or processor (for example, a CPU).

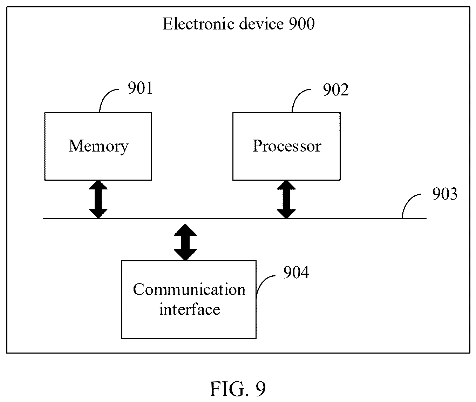

FIG. 9 is a diagram of a possible hardware structure of an electronic device 900 according to an embodiment of this application. The electronic device 900 may include a communication interface 904, at least one processor 902, and at least one memory 901. Optionally, a bus 903 may be further included. The memory 901, the processor 902, and the communication interface 904 may be connected through the bus 903.

The memory 901 is configured to provide storage space, and the storage space may store data such as an operating system and a computer program. In this embodiment of this application, the memory may store a device information version number (for example, the first version number or the second version number), verification data (for example, the first verification data or the second verification data), device information, and the like. The memory 901 may be one or a combination of a random access memory (random access memory, RAM), a read-only memory (read-only memory, ROM), an erasable programmable read-only memory (erasable programmable read-only memory, EPROM), a compact disc read-only memory (compact disc read-only memory, CD-ROM), or the like.

The processor 902 is a module that performs an arithmetic operation and/or a logic operation, and may be specifically one or a combination of processing modules such as a central processing unit (central processing unit, CPU), a graphics processing unit (graphics processing unit, GPU), a microprocessor unit (microprocessor unit, MPU), an application-specific integrated circuit (Application-Specific Integrated Circuit, ASIC), a field programmable gate array (Field Programmable Gate Array, FPGA), and a complex programmable logic device (Complex programmable logic device, CPLD).

The communication interface 904 is configured to receive data sent by an external device and/or send data to an external device, and may be a wired link interface including, for example, an Ethernet cable, or may be a wireless (for example, Wi-Fi, Bluetooth, or general wireless transmission) link interface. Optionally, the communication interface 904 may further include a transmitter (for example, a radio frequency transmitter or an antenna), a receiver, or the like that is coupled to the interface. For example, the electronic device 900 may include a communication chip, for example, a Bluetooth chip or a wireless local area network (wireless local area network, WLAN) chip.

In a design, the electronic device 900 may be configured to perform a function of the first device in the foregoing embodiments. For details, refer to the descriptions corresponding to the first device in the foregoing method embodiments. Details are not described herein again.

In another design, the electronic device 900 may be configured to perform a function of the second device in the foregoing embodiments. For details, refer to the descriptions corresponding to the second device in the foregoing method embodiments. Details are not described herein again.

In a possible design, the processor 902 in the electronic device 900 is configured to read the computer program stored in the memory 901, to perform an operation performed by the first device or the second device in the foregoing communication method, for example, the communication method described in the embodiment corresponding to FIG. 3, FIG. 6, FIG. 7, or FIG. 8A to FIG. 8C.

It should be noted that the electronic device 900 shown in FIG. 9 is merely an implementation of embodiments of this application. In actual application, the electronic device 900 may further include more or fewer components. This is not limited herein.

It should be noted that, for related information (that is, same information or similar information) and related descriptions in the foregoing different embodiments, reference may be made to each other.

It should be understood that sending in this embodiment of this application may be direct sending, or may be indirect sending. Direct sending means that a device or module directly sends information/data to a corresponding device or module, and indirect sending means that a device or module sends information/data to a corresponding device or module via another device or module.

Clearly, the described embodiments are only some but not all of embodiments of this application. "Embodiment" mentioned in the specification means that a particular feature, structure, or characteristic described with reference to embodiments may be included in at least one of embodiments of this application. The phrase shown in various locations in the specification may not necessarily refer to a same embodiment, and is not an independent or optional embodiment exclusive from another embodiment. It may be understood explicitly and implicitly by a person skilled in the art that embodiments described herein may be combined with other embodiments. All other embodiments obtained by a person of ordinary skill in the art based on embodiments of this application without creative efforts shall fall within the protection scope of this application. In the specification, claims, and accompanying drawings of this application, the terms "first", "second", "third", and the like are used to distinguish between different objects but do not indicate a particular order. In addition, the terms "include", "have", and any variants thereof are intended to cover a non-exclusive inclusion. For example, a series of steps or units are included; optionally, a step or unit that is not listed is further included; or optionally, another inherent step or unit of the process, the method, the product, or the device is further included. It may be understood that, in some embodiments, an equal sign of the foregoing condition determining may be greater than one end or less than one end. For example, the foregoing condition determining for a threshold greater than, or less than or equal to may be changed to a condition determining for a threshold greater than or equal to, or less than. This is not limited herein. It may be further understood that, for an architecture having a plurality of devices or modules, if one of the devices or modules generates one piece of information, and the other device or module uses the information, the other device may obtain the information in a plurality of manners. For example, one manner may be that the device or module that generates the information may directly send the information to the device or module that uses the information (which is equivalent to direct sending), or one manner may be that the device or module that generates the information may send, via another device or module, the information to the device or module that uses the information (which is equivalent to indirect sending).

It may be understood that the accompanying drawings show only some but not all content related to this application. It should be understood that some example embodiments are described as processing or methods depicted as flowcharts. Although the flowchart describes operations (or steps) as sequential processing, many of the operations can be implemented in parallel, concurrently, or simultaneously. In addition, the sequence of operations can be rearranged as long as it is logical. The processing may be terminated upon completion of its operation, but may further have additional steps not included in the accompanying drawings. The processing may correspond to a method, a function, a procedure, a subroutine, a subprogram, or the like.

Terminologies such as "component", "module", "system", and "unit" used in this specification indicate computer-related entities, hardware, firmware, combinations of hardware and software, software, or software being executed. For example, a unit may be, but is not limited to, a process running on a processor, a processor, an object, an executable file, an execution thread, or a program, and/or may be distributed between two or more computers. In addition, these units may be executed from various computer-readable media storing various data structures. For example, the units may communicate with each other by using a local and/or remote process based on a signal having one or more data packets (for example, data from a second unit interacting with another unit in a local system, in a distributed system, and/or across a network, such as the internet interacting with another system by using a signal).

In the foregoing specific implementations, the objectives, technical solutions, and beneficial effect of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A device get-online method, applied to a first device, comprising:
receiving a first packet, wherein the first packet comprises identification information of a second device, first verification data, and a first version number, the first verification data is obtained based on a valid communication key currently stored in the second device, and the first version number is a version number of device information that currently corresponds to the second device and that is required for getting online;
determining, based on the first verification data, that a communication key that corresponds to the second device and that is currently stored in the first device is valid, and determining, based on the first version number, that device information that corresponds to the second device and that is currently stored in the first device and that is required for getting online is valid; and
getting the second device online.

2. The method according to claim 1, wherein the method further comprises:
receiving a second packet, wherein the second packet comprises identification information of a third device, third verification data, and a third version number, the third verification data is obtained based on a valid communication key currently stored in the third device, and the third version number is a version number of device information that currently corresponds to the third device and that is required for getting online;
determining, based on the third verification data, that a communication key that corresponds to the third device and that is currently stored in the first device is valid, and determining, based on the third version number, that device information that corresponds to the third device and that is currently stored in the first device and that is required for getting online is invalid;
establishing a connection to the third device, and obtaining the device information that currently corresponds to the third device and that is required for getting online; and
getting the third device online.

3. The method according to claim 1 or 2, wherein the method further comprises:
receiving a third packet, wherein the third packet comprises identification information of a fourth device, fourth verification data, and a fourth version number, the fourth verification data is obtained based on a valid communication key currently stored in the fourth device, and the fourth version number is a version number of device information that currently corresponds to the fourth device and that is required for getting online;
determining, based on the fourth verification data, that a communication key that corresponds to the fourth device and that is currently stored in the first device is invalid, and determining, based on the fourth version number, that device information that corresponds to the fourth device and that is currently stored in the first device and that is required for getting online is valid;
establishing a connection to the fourth device, performing authentication on the fourth device, and negotiating a communication key; and
getting the fourth device online.

4. The method according to any one of claims 1 to 3, wherein the first verification data comprises a first Bloom encoding vector, and the first Bloom encoding vector is generated based on the valid communication key currently stored in the second device and one or more hash functions; and determining, based on the first verification data, that the communication key that corresponds to the second device and that is currently stored in the first device is valid comprises:
determining, based on the first Bloom encoding vector, that the communication key that corresponds to the second device and that is currently stored in the first device is valid.

5. The method according to claim 4, wherein determining, based on the first Bloom encoding vector, that the communication key that corresponds to the second device and that is currently stored in the first device is valid comprises:
processing, according to one or more hash functions corresponding to the first Bloom encoding vector, the communication key that corresponds to the second device and that is currently stored in the first device, to obtain one or more hash values; and
when values of bits corresponding to the one or more hash values in the first Bloom encoding vector are all 1s, determining that the communication key that corresponds to the second device and that is currently stored in the first device is valid.

6. The method according to any one of claims 1 to 5, wherein determining, based on the first version number, that the device information that corresponds to the second device and that is currently stored in the first device and that is required for getting online is valid comprises:
when the first version number is the same as a second version number, determining that the device information that corresponds to the second device and that is currently stored in the first device and that is required for getting online is valid, wherein the second version number is a version number of the device information that corresponds to the second device and that is currently stored in the first device and that is required for getting online.

7. The method according to any one of claims 2 to 6, wherein determining, based on the third version number, that the device information that corresponds to the third device and that is currently stored in the first device and that is required for getting online is invalid comprises:
when the third version number is different from a fifth version number, determining that the device information that corresponds to the third device and that is currently stored in the first device and that is required for getting online is invalid, wherein the fifth version number is a version number of the device information that corresponds to the third device and that is currently stored in the first device and that is required for getting online.

8. The method according to claim 7, wherein the device information that corresponds to the third device and that is currently stored in the first device and that is required for getting online and the device information that currently corresponds to the third device and that is required for getting online respectively comprise a plurality of pieces of corresponding device information, the third version number and the fifth version number each comprise a plurality of parts, and each of the plurality of parts corresponds to one or more pieces of device information in the plurality of pieces of device information; and the method further comprises:
when the third version number is different from the fifth version number, determining, based on each part corresponding to the third version number and each part corresponding to the fifth version number, whether device information corresponding to each part in the device information that corresponds to the third device and that is currently stored in the first device and that is required for getting online is valid;
when a first part corresponding to the third version number is the same as a first part corresponding to the fifth version number, determining that device information corresponding to the first part in the device information that corresponds to the third device and that is currently stored in the first device and that is required for getting online is valid, wherein the first part is any one of the plurality of parts; and
when the first part corresponding to the third version number is different from the first part corresponding to the fifth version number, determining that the device information corresponding to the first part in the device information that corresponds to the third device and that is currently stored in the first device and that is required for getting online is invalid; and
obtaining the device information that currently corresponds to the third device and is required for getting online comprises:
obtaining device information corresponding to an invalid part in the device information that currently corresponds to the third device and that is required for getting online.

9. The method according to any one of claims 6 to 8, wherein the third version number and the fifth version number each comprise a second part and a third part, a quantity of bits occupied by the second part is greater than a quantity of bits occupied by the third part, and a change frequency of device information corresponding to the second part is greater than a change frequency of device information corresponding to the third part.

10. The method according to any one of claims 1 to 9, wherein the device information that corresponds to the second device and that is required for getting online comprises device information with a first change frequency, device information with a second change frequency, and device information with a third change frequency, the first change frequency is greater than the second change frequency, the second change frequency is greater than the third change frequency, and the third change frequency is 0; and
the first version number is a version number of the device information with the second change frequency in the device information that currently corresponds to the second device and that is required for getting online, or the first version number is a version number of the device information with the first change frequency and the device information with the second change frequency in the device information that currently corresponds to the second device and that is required for getting online, wherein
when the first version number is the version number of the device information with the second change frequency in the device information that currently corresponds to the second device and that is required for getting online, the first packet further comprises the device information with the first change frequency in the device information that currently corresponds to the second device and that is required for getting online.

11. The method according to any one of claims 1 to 10, wherein the first verification data and the first version number are carried in a data field of the first packet.

12. An electronic device, comprising a processor and a communication interface, wherein the communication interface is configured to receive and/or send data, and the processor invokes a computer program or computer instructions stored in a memory to implement the method according to any one of claims 1 to 11.

13. A computer-readable storage medium, wherein the computer-readable storage medium stores a computer program or computer instructions, and the computer program or the computer instructions are executed by a processor to implement the method according to any one of claims 1 to 11.

14. A computer program product, wherein the computer program product comprises computer program code or computer instructions, and when the computer program code or the computer instructions are run, the method according to any one of claims 1 to 11 is implemented.
